(19) Europäisches Patentamt
European Patent Office
Office européen des brevets

(11) **EP 2 861 373 B1**

(12) **EUROPÄISCHE PATENTSCHRIFT**

(45) Veröffentlichungstag und Bekanntmachung des Hinweises auf die Patenterteilung:
**25.01.2023   Patentblatt 2023/04**

(21) Anmeldenummer: **13729012.8**

(22) Anmeldetag: **10.06.2013**

(51) Internationale Patentklassifikation (IPC):
**B23P 15/00** (2006.01)    **F16B 37/08** (2006.01)
**B23G 7/02** (2006.01)    **B23G 5/06** (2006.01)
**B23G 5/20** (2006.01)    **B23G 5/04** (2006.01)

(52) Gemeinsame Patentklassifikation (CPC):
**B23G 5/06; B23G 5/04; B23G 7/02;** B23G 2210/48;
F16B 37/085

(86) Internationale Anmeldenummer:
**PCT/EP2013/061906**

(87) Internationale Veröffentlichungsnummer:
**WO 2013/186165 (19.12.2013 Gazette 2013/51)**

(54) **VERFAHREN UND WERKZEUG ZUM ERZEUGEN EINES GEWINDES IN EINEM WERKSTÜCK**

METHOD AND TOOL FOR PRODUCING A THREAD IN A WORKPIECE

PROCÉDÉ ET OUTIL DE CRÉATION D'UN FILETAGE DANS UNE PIÈCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2012   DE 102012105183**

(43) Veröffentlichungstag der Anmeldung:
**22.04.2015   Patentblatt 2015/17**

(73) Patentinhaber:
• **EMUGE-Werk Richard Glimpel GmbH & Co.KG Fabrik für Präzisionswerkzeuge**
**91207 Lauf a.d. Pegnitz (DE)**
• **Audi AG**
**85045 Ingolstadt (DE)**

(72) Erfinder:
• **KOPTON, Peter**
**85092 Kösching (DE)**
• **HECHTLE, Dietmar**
**91257 Pegnitz (DE)**
• **GLIMPEL, Helmut**
**91207 Lauf (DE)**

(74) Vertreter: **Schröer, Gernot H.**
**Meissner Bolte Patentanwälte**
**Rechtsanwälte Partnerschaft mbB**
**Bankgasse 3**
**90402 Nürnberg (DE)**

(56) Entgegenhaltungen:
EP-A1- 2 522 451      DE-A1-102005 022 503
DE-A1-102012 110 986      US-A- 2 703 419

EP 2 861 373 B1

**Beschreibung**

Die Erfindung betrifft ein Verfahren und ein Werkzeug jeweils zum Erzeugen eines Gewindes in einem Werkstück. US2703419 offenbart ein Werkzeug, dass sowohl einen geraden nuterzeugenden als auch einen geraden gewindefurchenden (gewindeerzeugenden) Bereich aufweist. Sie offenbart ebenfalls ein Verfahren, wobei eine gerade Nut und ein Gewinde erzeugt werden.

Zur Gewindeerzeugung oder Gewindenachbearbeitung sind sowohl spanabhebende als auch spanlose Verfahren und Gewindewerkzeuge bekannt. Spanabhebende Gewindeerzeugung beruht auf Materialabtrag des Materials des Werkstücks im Bereich des Gewindeganges. Spanlose Gewindeerzeugung beruht auf einer Umformung des Werkstücks und Erzeugung des Gewindeganges in dem Werkstück durch Druck. Einen Überblick über im Einsatz befindliche Gewindeerzeugungswerkzeuge und Arbeitsverfahren gibt das Handbuch der Gewindetechnik und Frästechnik, Herausgeber: EMUGE-FRANKEN, Verlag: Publicis Corporate Publishing, Erscheinungsjahr: 2004 (ISBN 3-89578-232-7), im Folgenden nur als "EMUGE-Handbuch" bezeichnet.

Unter die spanabhebenden oder spanenden Gewindeerzeugung fallen die Gewindebohrer (vgl. EMUGE-Handbuch, Kapitel 8, Seiten 181 bis 298) und die Gewindefräser (vgl. EMUGE-Handbuch, Kapitel 10, Seiten 325 bis 372) sowie, nur für Außengewinde, die Schneideisen (vgl. EMUGE-Handbuch, Kapitel 11, Seiten 373 bis 404).

Ein Gewindebohrer ist ein Gewindeschneidwerkzeug, dessen Schneiden oder Gewindeschneidzähne entlang eines Außengewindes unter der Gewindesteigung des zu erzeugenden Gewindes angeordnet sind. Beim Erzeugen des Gewindes wird der Gewindebohrer mit zur Werkzeugachse axialem Vorschub und unter Drehung um seine Werkzeugachse mit von der axialen Vorschubgeschwindigkeit entsprechend der Gewindesteigung abhängiger Drehgeschwindigkeit in ein zylindrisches Kernloch in einem Werkstück bewegt, wobei die Werkzeugachse des Gewindebohrers koaxial zur Mittelachse des Kernloches ausgerichtet wird und seine Schneiden permanent mit dem Werkstück an der Kernlochwandung in Eingriff sind (kontinuierlicher Schnitt), so dass ein durchgehender Gewindegang an der Kernlochwandung entsteht.

Unter die spanlosen Gewindeerzeugungswerkzeuge fallen die sogenannten Gewindefurcher (vgl. EMUGE-Handbuch, Kapitel 9, Seiten 299 bis 324) und, nur für Außengewinde, die Gewindewalzwerkzeuge (vgl. EMUGE-Handbuch, Kapitel 11, Seiten 373 bis 404)

Gewindefurcher sind Gewindewerkzeuge mit einem annähernd spiral- oder schraubenförmig umlaufenden Gewindeprofil, entlang dem mehrere Drückstollen (auch als Formzähne, Furchzähne oder Formkeile bezeichnet) angeordnet sind, die durch zueinander versetzte weiter nach außen ragende und im Allgemeinen abgerundete Polygon-Eckbereiche eines annähernd polygonalen Querschnittes des Gewindefurchers gebildet sind. Beim Erzeugen des Gewindes wird der Gewindefurcher ähnlich wie der Gewindebohrer mit zur Werkzeugachse axialem Vorschub und unter Drehung um seine Werkzeugachse in ein zylindrisches Kernloch in einem Werkstück bewegt, wobei die Werkzeugachse des Gewindebohrers koaxial zur Mittelachse des Kernloches ausgerichtet wird. Die Drehgeschwindigkeit und die axiale Vorschubgeschwindigkeit werden entsprechend der Gewindesteigung aufeinander abgestimmt. Die Drückstollen des Gewindefurchers sind permanent mit dem Werkstück an der Kernlochwandung in Eingriff und drücken den Gewindegang durch plastische Verformung in die Kernlochwandung, so dass ein durchgehender Gewindegang an der Kernlochwandung entsteht.

Ferner sind ausschließlich spanabhebend arbeitende Kombinationswerkzeuge aus Bohrer und Gewindefräser bekannt, nämlich der sogenannte Bohrgewindefräser (BGF) (vgl. EMUGE-Handbuch, Kapitel 10, Seite 354) und der sogenannte Zirkularbohrgewindefräser (ZBGF) ((vgl. EMUGE-Handbuch, Kapitel 10, Seite 355), mit denen zunächst das Kernloch für das Gewinde und dann das Gewinde in dem Kernloch erzeugt werden können.

Ein mit der gleichen Arbeitsbewegung arbeitendes Kombinationswerkzeug aus Bohrer und Zirkulargewindeformer, ein sogenannter Bohrzirkulargewindeformer, ist aus der DE 10 2005 022 503 A1 bekannt.

Der Werkzeugschaft der genannten Gewindeerzeugungswerkzeuge ist in der Regel wenigstens annähernd zylindrisch um seine Längsachse ausgeführt und/oder mit seinem vom Werkstück abgewandten Ende im Spannfutter einer Werkzeugmaschine aufgenommen und gehalten. Der Drehsinn von Gewindebohrer und Gewindefurcher beim Erzeugen des Gewindes entspricht dem Windungssinn des zu erzeugende Gewindes. Die in die erzeugten Innengewinde eingeschraubten bekannten Schrauben oder Schraubgewinde umfassen zu den Innengewinden komplementäre durchgehende helikale Außengewinde.

Die DE 1 176 450 offenbart ein Verfahren zum Herstellen von Innengewinde in Blech oder ähnlichen Werkstücken mit den folgenden Verfahrensschritten:

    1. Ausstanzen eines an sich runden Loches mit mehreren gleichmäßig verteilten Aussparungen,
    2. Einführen eines Gewindebohrers, dessen Anzahl der Schneidstege der Anzahl der Aussparungen entspricht,
    3. Drehen des Gewindebohrers um einen Winkel, der dem Winkel zwischen zwei Aussparungen entspricht,
    4. Herausziehen des Gewindebohrers.

Bei diesem bekannten Verfahren stellt, wie in der DE 1 176 450 ausgeführt, ein Gewindebohrer, Spanlos-Gewindebohrer oder ähnliches Werkzeug durch eine nur teilweise Drehung das Gewinde her. Bei Verwendung eines Verbundwerkzeuges ist es gemäß der DE 1 176 450 möglich, diese Innengewinde schon beim Stanzen des Teiles mit anzubringen, wobei mehrere auch mit verschiedenen Außendurchmessern und Steigungen gleichzeitig gefertigt werden können. Die Herstellung durch einen eigenen Arbeitsgang kann mit einem Stanzwerkzeug oder einer einfachen Vorrichtung von Hand vorgenommen werden.

Die US 3,359,581 offenbart ein Verfahren zum Herstellen von Gewinden, bei dem ein Werkstück ein oder zwei axiale Nuten aufweist und ein Gewindeerzeugungswerkzeug axiale Gewindeerzeugungsbereiche aufweist, die koaxial in die Nuten des Werkstücks eingeführt werden. Sodann wird durch eine Drehung um einen Umlauf bei einer Nut und um einen halben Umlauf bei zwei Nuten mit den Gewindeerzeugungsbereichen des Gewindeerzeugungswerkzeugs im Werkstück zwischen den Nuten ein Gewinde erzeugt und das Gewindeerzeugungswerkzeug dann wieder axial von dem Werkstück abgezogen. Das Werkstück kann ein Kernloch mit zwei diametralen herausragenden Nuten aufweisen oder auch ein zylinderförmiger Bolzen mit zwei diametralen Nuten sein. Im ersten Fall ist das Gewindeerzeugungswerkzeug ein Gewindebohrer oder Gewindeschneidwerkzeug mit zwei axial diametral gegenüberliegend verlaufenden Gewindeschneidstegen und im zweiten Fall ein Gewindeschneidwerkzeug ähnlich einem Gewindeschneideisen mit axial gegenüberliegenden, nach innen ragenden Gewindeschneidstegen.

Die EP 2 218 536 A1 offenbart ein Verfahren zum Ausformen eines Innengewindes an einem Grundkörper, wobei zuerst ein Gewindewerkzeug, das bereichsweise zumindest in einem Abschnitt mit gewindeausbildenden Mitteln aufweist, in einer Öffnung im Grundkörper eingeführt wird und anschließend durch eine Rotation des Gewindewerkzeugs von maximal 360° das gesamte Innengewinde in den Grundkörper ausgebildet wird. Das Gewindewerkzeug weist mehrere in einer Rotationssymmetrie ganzzahlige Ordnung angeordnete Abschnitte mit gewindeausbildenden Mitteln auf und das Gewindewerkzeug wird um einen Rotationswinkel rotiert, der dem Wert des Quotienten eines Vollkreises durch die Anzahl der Abschnitte mit dem gewindeausbildenden Mittel des Gewindewerkzeugs entspricht. Vor dem Einführen des Gewindewerkzeugs werden in der Innenwandung des Grundkörpers in einer Rotationssymmetrie ganzzahlige Ordnung angeordnete Ausnehmungen vorgesehen, deren Anzahl der Anzahl der Abschnitte mit dem gewindeausbildenden Mitteln am Gewindewerkzeug entspricht und deren Ausgestaltung auf die Ausgestaltung der Abschnitte mit dem gewindeausbildenden Mitteln am Gewindewerkzeug abgestimmt ist.

Insbesondere sind vier Ausnehmungen und vier entsprechende Gewindestege am Gewindewerkzeug vorgesehen.

In EP 2 522 451 A1, die als Stand der Technik unter Artikel 54(3) EPÜ gilt, ist ein Verfahren offenbart zum Ausformen eines Innengewindes in einer Aufnahme eines Grundkörpers mittels eines Gewindeschneiders, wobei die Aufnahme zumindest eine im Wesentlichen in Längsrichtung verlaufende Nut aufweist und in Umfangsrichtung nach der Nut ein radial einwärts und axial verlaufender Vorsprung vorgesehen ist. Das Verfahren weist die folgenden Schritte auf:

a) Einführen des Gewindeschneiders, welcher eine axiale Längsausnehmung besitzt, an die in Umfangsrichtung radial auswärts vorstehenden Schneiden mit Schneidkanten angrenzen, in die Aufnahme, wobei an der Längsausnehmung mehrere in Längsrichtung hintereinanderliegende Schneidkanten vorgesehen sind, die in Umfangsrichtung versetzt zueinander angeordnet sind, die beim Einführen des Gewindeschneiders in die Nut eingeschoben werden,

b) Drehen des Gewindeschneiders um maximal 360° zur Ausformung des gesamten Innengewindes in den Vorsprung, wobei die Schneidkanten beim Drehen des Gewindeschneiders nacheinander in den Vorsprung eindringen, und

c) Axiales Herausbewegen des Gewindeschneiders aus der Aufnahme.

Die Nut der Aufnahme kann auch wendelförmig in der Aufnahme verlaufen und der Gewindeschneider wird beim Einführen des Gewindeschneiders der Nut folgend gedreht, wobei insbesondere die Schneidkanten beim Einführen nicht in Kontakt mit der Aufnahme gelangen. Dadurch ist die durch die Nut gebildete Unterbrechung einer Gewindeumdrehung jeweils in Umfangsrichtung versetzt, wodurch eine bessere Lastübertragung von einem in den Grundkörper eingedrehten Lastübertragungsmittel auf den gesamten Umfang der Aufnahme möglich ist.Es ist nun Aufgabe der Erfindung, ein neues Verfahren und ein neues Werkzeug jeweils zum Erzeugen eines Gewindes anzugeben.

Diese Aufgabe wird hinsichtlich des Verfahrens mit den Merkmalen des Anspruchs 1 oder des Anspruchs 2 und hinsichtlich des Werkzeugs mit den Merkmalen des Anspruchs 10 gelöst. Vorteilhafte Ausgestaltungen und Weiterbildungen des Verfahrens oder Werkzeugs gemäß der Erfindung ergeben sich aus den vom Patentanspruch 1 oder 2 bzw. 10 jeweils abhängigen Patentansprüchen.

Gegenüber konventionellem Gewindebohren und Gewindefurchen können mit diesem Verfahren und Werkzeug gemäß der Erfindung die Zeiten für die Herstellung des Gewindes deutlich reduziert werden. Das Werkzeug kann ferner aufgrund der gedrallten Einführbewegung durch die Nuten sehr schnell von außen in seine Arbeitsposition an die Wandung des Werkstücks geführt werden, sodann das Gewinde mit einem wesentlich kleineren Drehwinkel oder mit wesentlich weniger Umdrehungen hergestellt werden und schließlich nach Erzeugen des Gewindes das Gewindewerkzeug aufgrund der Herausführbewegung durch die Nuten sehr schnell nach außen von der Wandung des Werkstücks weg geführt werden. Beim Gewindebohren oder Gewindefurchen gemäß dem Stand der Technik sind immer mehrere Umdrehungen des Gewindebohrers oder Gewindefurchers notwendig und zwar zunächst beim Eindrehen und dann noch einmal beim Zurückdrehen des Werkzeugs. Beim Verfahren und Werkzeug gemäß der Erfindung genügt eine Umdrehung oder sogar nur ein Teil einer Umdrehung entsprechend der Zahl und Anordnung der Nuten, kombiniert mit den gedrallten Zuführ- und Abführbewegungen. Die für das Erzeugen der Nuten erforderliche zusätzliche Zeit ist dabei deutlich kleiner als die Zeitersparnis beim Gewindeerzeugen. Ferner kann das Gewinde gemäß der Erfindung bezüglich seiner axialen Position und bezüglich des Gewindeanfangs stellungsgenau eingebracht werden. Die Nuten stellen definierte Positionen für das Gewinde dar.

Bevorzugt ist das kombinierte Werkzeug gemäß der Erfindung zum Einsatz oder zur Verwendung in dem Verfahren gemäß der Erfindung vorgesehen. Es erlaubt die Herstellung von Nuten und Gewinde in einem Arbeitsschritt oder mit nur einem Werkzeug, was die Prozesszeiten weiter reduziert.

Die Erzeugung gedrallter Nuten hat gegenüber den aus dem genannten Stand der Technik DE 1 176 450 und US 3,359,581 und EP 2 218 536 A1 bekannten geraden Nuten den Vorteil, dass die beim Nuterzeugen erforderlichen Axialkräfte reduziert werden. Durch den Drall wird der Axialkraft ein Drehmoment überlagert, was sich dämpfend auf die Axialbelastung einer Werkzeugspindel, mit der das Werkzeug angetrieben wird, auswirkt. Bei spanender Nuterzeugung können darüber hinaus in den gedrallten Nuten die erzeugten Späne besser nach vorne abgeführt werden.

Die Nutdrallsteigung der Nuten ist vorzugsweise deutlich größer gewählt als die Gewindesteigung, im Allgemeinen wenigstens viermal so groß, insbesondere wenigstens sechsmal so groß, vorzugsweise wenigstens achtzehnmal so groß oder sogar wenigstens sechsunddreißig mal so groß.

Alternativ oder zusätzlich ist der Gewindesteigungswinkel deutlich größer als der Nutdrallwinkel gewählt, insbesondere größer als das Zweifache und vorzugsweise größer als das Vierfache des Nutdrallwinkels, wobei die Winkel jeweils gegenüber der Gewindeachse bzw. Werkzeugachse gemessen sind. Üblicherweise wird der Gewindesteigungswinkel gegenüber der Normalenebene zur Achse betrachtet, aber der besseren Vergleichbarkeit wegen sind in der vorliegenden Anmeldung der Nutdrallwinkel und der Gewindesteigungswinkel zur selben Bezugsachse hin definiert.

Damit lässt sich eine große Prozesszeitverkürzung gegenüber konventionellen Gewindebohren oder -furchen sicherstellen bei gleichzeitiger Reduzierung von Axialkräften bei der Nuterzeugung.

Der Nutdrallwinkel liegt absolut bevorzugt in einem Bereich zwischen 2° und 70°, insbesondere zwischen 5° und 45° und vorzugsweise zwischen 7° und 25°.

Der Gewindesteigungswinkel liegt im Allgemeinen zwischen 80° und 89,5°, bevorzugt zwischen 85° und 89°.

Die Drallrichtungen oder Umlaufsinne von Nuten und Gewinde um die Gewindeachse können gleich, also beide rechts oder beide links herum, oder auch entgegengesetzt zueinander sein, also eine rechts und eine links herum.

Wenn das Gewinde mit einem Vorschub des kombinierten Werkzeugs in einer Richtung zum Werkstück hin, also in der Vorwärtsbewegung, erzeugt wird, dann ist ein gleicher Umlaufsinn von Gewinde und Nut vorteilhaft und wenn das Gewinde mit einem Vorschub des Werkzeugs in einer Richtung vom Werkstück weg, also in der Rückwärtsbewegung, erzeugt wird, dann ist ein entgegengesetzter Umlaufsinn von Gewinde und Nut vorteilhaft, da dann in beiden Fällen das Werkzeug bei der Nuterzeugung und bei der Gewindeerzeugung in die gleiche Drehrichtung gedreht werden kann.

In einer besonders vorteilhaften Ausführungsform des Verfahren erfolgt bei dem Erzeugen des Gewindes eine Drehung des Werkzeuges um einen vorgegebenen Drehwinkel und dieser Drehwinkel wird gemäß einer der folgenden Maßgaben oder einer Kombination daraus gewählt oder eingestellt:

a) als Summe aus einem Winkelabstand zweier Nuten, vorzugsweise zweier unmittelbar benachbarter Nuten, einerseits und einem Korrekturterm, der proportional zu dem Quotienten aus der Gewindesteigung des zu erzeugenden Gewindes und der Differenz der Drallsteigung der Nuten und der Gewindesteigung des zu erzeugenden Gewindes ist, wobei vorzugsweise die Gewindesteigung und die Drallsteigung positiv bei einem Rechtsgewinde oder einem Rechtsdrall und negativ bei einem Linksgewinde oder Linksdrall gewählt sind, andererseits,

b) auf einen solchen Wert, dass jeder Gewindeerzeugungsbereich nach der Drehung in eine Nut ragt, die zu der Nut, in die der Gewindeerzeugungsbereich vor der Drehung ragt, unmittelbar benachbart ist,

c) bei äquidistanter Anordnung oder Erzeugung der n Nuten in einem gleichen Winkelabstand von 360°/n zueinander als ganzzahliges Vielfaches der Summe von 360°/n einerseits und einem Korrekturterm, der dem Produkt aus 360°/n einerseits und dem Quotienten aus der Gewindesteigung des zu erzeugenden Gewindes und der Differenz der Drallsteigung der Nuten und der Gewindesteigung des zu erzeugenden Gewindes andererseits entspricht, ergibt, wobei vorzugsweise die Gewindesteigung (P) und die Drallsteigung (PN) positiv bei einem Rechtsgewinde oder einem Rechtsdrall und negativ bei einem Linksgewinde oder Linksdrall gewählt sind.

Der Drehwinkelkorrekturterm korrigiert den längeren (oder kürzeren) Drehweg für die Gewindeerzeugung bei gedrallten Nuten im Vergleich zu geraden axialen Nuten.

In einer bevorzugten und zweckmäßigen Ausführungsform verläuft jede gedrallte Nut oder jeder Gewindeerzeugungsbereich beim Erzeugen des Gewindes im Wesentlichen helikal um die Gewindeachse, vorzugsweise auf einer Zylinderfläche oder auch einem Konus.

Ferner weisen vorzugsweise jede Nut und jeder Gewindeerzeugungsbereich den gleichen Drall sowohl hinsichtlich des Umlaufsinnes um die Gewindeachse oder Werkzeugachse als auch hinsichtlich der Drallsteigung oder des Drallwinkels auf.

Die Erzeugung der Nut(en) kann spanabhebend oder auch spanlos erfolgen mit entsprechend spanabebend oder spanlos arbeitenden Nuterzeugungswerkzeugen oder Nuterzeugungsbereichen des kombinierten Werkzeuges.

In einer bevorzugten Variante sind wenigstens ein Teil der n Nuterzeugungsbereiche eines Nuterzeugungswerkzeuges oder des kombinierten Werkzeuges als spanabhebende Nuterzeugungsbereiche mit Nuterzeugungsschneiden ausgebildet sind, wobei die Nuterzeugungsschneiden insbesondere als Räumschneiden ausgebildet sind und/oder an einer Stirnseite des Werkzeugs angeordnet sind.

Wenigstens ein Teil der spanabhebenden Nuterzeugungsbereiche und/oder Nuterzeugungsschneiden können in axialer Richtung oder Drallrichtung und/oder in Umfangsrichtung jeweils wenigstens eine Stufe oder Kante aufweisen, die insbesondere als Spanaufteilstufe oder -kante vorgesehen ist.

In einer bevorzugten Variante weist der oder jeder Nuterzeugungsbereich weist eine zur Stirnseite gerichtete oder an dieser befindliche Nutschneide oder Stirnschneide auf, wobei diese Nutschneiden im Allgemeinen die radial am Weitesten nach außen ragenden Teile des Werkzeuges, zumindest in dessen vorderem Abschnitt, sind.

In einer Ausführungsform sind die Nutschneiden wenigstens annähernd kreisrund ausgebildet und/oder der Außenradius der Nutschneiden ist größer als der Radius des ersten Gewindeerzeugungsteilbereichs oder des Gewindeerzeugungsbereiches insgesamt.

An oder jede Nutschneide schließt sich in einer Ausführungsform seitlich in Umfangsrichtung eine im Drehsinn um die Werkzeugachse vordere Seitenschneide und vorzugsweise auch ein im Drehsinn um die Werkzeugachse hinterer Seitenbereich an. Die vordere Seitenschneide schneidet beim zur Erzeugung des Gewindes erfolgenden Drehen des Werkzeugs im Drehsinn seitlich in das Werkstück ein, wobei sich vorzugsweise radial nach innen eine seitliche Spanfläche anschließt. Der hintere Seitenbereich ist dagegen in der Regel stumpf, also nicht schneidend und vorzugsweise konvex ausgebildet.

Axial oder in Drallrichtung hinter der Nutschneide schließt sich im Allgemeinen eine Freifläche an, die vorzugsweise vom Außenradius an der Nutschneide auf einen Radius, der kleiner ist als der Radius des ersten Drückstollens oder des ersten Gewindeerzeugungsteilbereichs, abfällt, insbesondere linear oder konisch.

Radial nach innen schließt sich an die Nutschneide eine stirnseitige Spanfläche an, die linear oder auch konkav gekrümmt axial oder in Drallrichtung nach hinten verläuft und auf der beim Erzeugen, insbesondere, Räumen der Nut mit der Nutschneide entstehende Späne ablaufen. Die stirnseitige Spanfläche verläuft bevorzugt von einer tiefsten Stelle wieder axial oder in Drallrichtung nach vorne bis zu einem ebenen, senkrecht zur Werkzeugachse gerichteten Zentralbereich, der eine zentrale Öffnung eines zentralen Kanals des Werkzeugs umgibt, über den Kühl- und/oder Schmiermittel zugeführt werden kann.

In einer weiteren Ausführungsform ist wenigstens ein Teil der n Nuterzeugungsbereiche spanlos und/oder durch plastisches Verformen oder Eindrücken des Werkstückmaterials arbeitend ausgebildet. Jeder Nuterzeugungsbereich weist bevorzugt einen, im Wesentlichen in Umfangsrichtung um die Werkzeugachse verlaufenden Formgrat (oder: Formsteg, Drücksteg), der in axialer Richtung oder Drallrichtung gesehen die radial höchste Erhebung des Nuterzeugungsbereichs ist und/oder radial am Weitesten nach außen ragt, und im Allgemeinen auch eine in axialer Richtung oder in Drallrichtung vor dem Formgrat liegende Vorderfläche auf, die als Anlauffläche dient, mit der der Nuterzeugungsbereich zuerst in die Werkstückoberfläche und mit langsam zunehmender Umformkraft eindrückt. Die Vorderfläche verbindet ein radial weiter innen als der Formgrat liegendes Vorderprofil, das insbesondere an der Stirnseite des Werkzeugs angeordnet ist, mit dem Formgrat in axialer Richtung. Axial oder in Drallrichtung hinter dem Formgrat weist jeder Nuterzeugungsbereich eine Rückenfläche auf, die von dem Formgrat in axialer Richtung oder Drallrichtung abfällt und einen Freiraum zum Fließen von Werkstückmaterial bietet.

Der Formgrat hat bevorzugt ein radial am Weitesten nach außen ragendes Maximum und fällt radial vom Maximum in einer Flanke zu einem ersten Endpunkt, der radial weiter innen liegt als das Maximum, und in einer weiteren Flanke zu einem zweiten Endpunkt, der radial weiter innen liegt als das Maximum, ab. Vorzugsweise liegt auch ein Endpunkt radial weiter innen als der andere Endpunkt und/oder eine Flanke des Formgrates ist kürzer als die andere Flanke.

Das Vorderprofil hat im Allgemeinen eine ähnliche Form wie der Formgrat mit einem Maximum und zwei vom Maximum zu Endpunkten abfallenden Flanken, wobei nun die Vorderfläche vorzugsweise entsprechende Punkte und Linien wie entsprechende Maxima und/oder entsprechende Endpunkte und/oder entsprechende Flanken des Vorderprofils und des Formgrates miteinander verbindet. Vorzugsweise verläuft die Vorderfläche zwischen dem Vorderprofil und dem Formgrat in axialer Richtung im Wesentlichen linear oder konvex nach innen oder außen, oder einer beliebigen stetigen Funktion folgend, gekrümmt.

Die Nuten können in die Wandung des Werkstücks nachträglich eingebracht oder auch gemeinsam schon mit der Wandung des Werkstückes erzeugt werden.

In einer bevorzugten Ausführungsform weist wenigstens einer, vorzugsweise jeder, der m Gewinderzeugungsbereiche im Querschnitt in einer dem Drall folgenden Projektion eine kleinere Ausdehnung auf als der davor angeordnete oder vorgelagerte Nuterzeugungsbereich. Dadurch hat jeder Gewindeerzeugungsbereich einen Abstand oder ein Spiel vom Nutrand, insbesondere dem Nutgrund, und ist durch die vom davor liegenden Nuterzeugungsbereich erzeugte Nut im Werkstück im Wesentlichen frei und reibungsarm bewegbar, insbesondere einführbar oder herausführbar.

Insbesondere beim Einführen in die zugehörige Nut ragt der Gewindeerzeugungsbereich in zur Gewindeachse radialer Richtung in die zugehörige Nut unter Einhaltung eines radialen Abstandes zum Nutgrund und vorzugsweise auch eines Abstandes zu den Nutflanken.

Es kann aber in einer besonderen Ausführungsform wenigstens einer oder jeder der m Gewindeerzeugungsbereiche im Querschnitt in einer dem Drall folgenden Projektion zumindest teilweise eine gleiche oder größere Ausdehnung aufweist als der davor angeordnete Nuterzeugungsbereich.

Dies ist besonders dann sinnvoll, wenn der oder die Gewindeerzeugungsbereich(e) die vom Nuterzeugungsbereich erzeugte Nut weiter nacharbeiten oder erzeugen soll, insbesondere durch spanloses Einformen.

Ein weiteres Werkzeug gemäß der Erfindung, das mit allen anderen Ausführungsformen kombinierbar ist, ist um eine Werkzeugachse drehbar und weist eine Anzahl m >_ 1 von um die Werkzeugachse gedrallten Gewindeerzeugungsbereichen zum Erzeugen eines Gewindes in einem Werkstück auf, umfasst einen Schaft, der einen, beispielsweise zylindrisch ausgebildeten, hinteren Abschnitt und einen vorderen Abschnitt, der im Durchmesser im Anschluss an den hinteren Abschnitt verjüngt ist, aufweist und durch den zentral die Werkzeugachse verläuft. Am Ende des hinteren Abschnitts ist ein Einspannbereich zum Einspannen des Schaftes ausgebildet. Der vordere Abschnitt weist zur vom hinteren Abschnitt abgewandten oder vorne angeordneten Stirnseite hin die m Gewindeerzeugungsbereiche auf. Die m Gewindeerzeugungsbereiche sind in Form von jeweils gedrallt um die Werkzeugachse verlaufenden gedrallten Reihen von Gewindeerzeugungsstegen ausgebildet, die für den Fall m = 2 vorzugsweise an entgegen gesetzten Seiten der Werkzeugachse diametral zueinander angeordnet sind. Die Gewindeerzeugungsstege verlaufen entlang der Gewindesteigung des gewünschten Gewindes und weisen jeweils einen radial zur Werkzeugachse am Weitesten nach außen ragenden Drückstollen auf zum plastischen Eindrücken des Gewindeganges in das Werkstück. Die Außenradien unterschiedlicher Gewindeerzeugungsstege oder Drückstollen der beiden Gewindeerzeugungsbereiche sind gleich zueinander über die gesamte Länge. Die Gewindeerzeugungsbereiche sind durch dazwischen liegende Außenflächen getrennt, die einen geringeren Außenradius haben als die Gewindeerzeugungsbereiche, also gegenüber diesen radial zurückversetzt sind, und/oder Freiräume zwischen den Gewindeerzeugungsbereichen bilden. Bevorzugt überdecken die Gewindeerzeugungsbereiche jeweils einen ersten Winkelbereich und die Außenflächen jeweils einen zweiten Winkelbereich, wobei bevorzugt der erste Winkelbereich in einem Intervall von dem einfachen bis zum 2,5-fachen des zweiten Winkelbereichs liegt und/oder wobei die Drückstollen bevorzugt mittig in den jeweiligen Winkelbereichen liegen. Die Außenflächen weisen eine konvexe nach außen gerichtete Auswölbung auf.

In einer Ausführungsform sind die n Nuterzeugungsbereiche sind um die Werkzeugachse in einem gleichen Winkelabstand von 360°/n zueinander angeordnet, also gleich verteilt angeordnet. Es ist aber auch eine ungleiche Teilung möglich.

Der Winkelanteil eines oder jedes Nuterzeugungsbereichs und der dahinter liegenden Gewindeerzeugungsbereiche um die Werkzeugachse beträgt in einer Variante der Erfindung zwischen 7,2° und 45°, insbesondere zwischen 13° und 40° und vorzugsweise zwischen 27° und 36°.

Die Gewindeerzeugungsbereiche ragen im Allgemeinen radial weiter nach außen als die übrigen Außenflächen des Gewindeerzeugungswerkzeugs.

In einer Variante gemäß der Erfindung ist wenigstens ein Gewindeerzeugungsbereich ein Gewindeformbereich und erzeugt seinen Teil des Gewindeganges formend und damit spanlos und/oder weisen wenigstens ein Teil der Gewindeerzeugungsbereiche des Gewindeerzeugungswerkzeugs auf einer dem zu erzeugenden Gewinde in der Gewindesteigung und dem Windungssinn entsprechenden Schraubenlinie um die Werkzeugachse angeordnete Gewindedrückstollen auf, die innerhalb des Gewindeerzeugungsbereiches radial am Weitesten nach außen ragen, jedoch radial weniger weit nach außen ragen als der oder die Nuterzeugungsbereich(e). Die Gewindeerzeugungsbereiche sind nun insbesondere in der Funktionsweise von einem Gewindefurcher abgeleitet.

In einer bevorzugten Ausführungsform ist wenigstens ein Gewindeerzeugungsbereich ein Gewindeschneidbereich und erzeugt seinen Teil des Gewindeganges spanabhebend. Wenigstens ein Teil der Gewindeerzeugungsbereiche des Gewindeerzeugungswerkzeugs weisen auf einer Schraubenlinie, die dem zu erzeugenden Gewinde in der Gewindesteigung und dem Windungssinn entspricht, um die Werkzeugachse angeordnete Gewindeschneidzähne auf, die innerhalb des Gewindeerzeugungsbereiches radial am Weitesten nach außen ragen, jedoch radial weniger weit nach außen ragen als der oder die Nuterzeugungsbereich(e), wobei sich an die Gewindeschneidzähne in Richtung entgegengesetzt zur Schneidrichtung oder Drehrichtung vorzugsweise äußere Freiflächen anschließen. Die Gewindeschneidzähne haben Gewindeschneiden oder ein Schneidprofil, die bzw. das sich auf das zu erzeugende Gewindeprofil des Gewindeganges in dessen Querschnitt abbilden bzw. abbildet.

In einer Ausführungsform sind die Gewindeschneidzähne im Windungssinn des zu erzeugenden Gewindes und der um die Werkzeugachse verlaufenden Schraubenlinie, auf der die Gewindeschneidzähne angeordnet sind, schneidend angeordnet und ausgebildet sind. Das bedeutet, wenn das zu erzeugende Gewinde rechtsgängig ist, schneiden die Gewindeschneidzähne auch nach rechts oder ebenfalls rechtsgängig, und wenn das zu erzeugende Gewinde linksgängig ist, schneiden die Gewindeschneidzähne auch nach links oder linksgängig.

Man bezeichnet ein Gewinde als Rechtsgewinde oder rechtsgängig, wenn es sich in der Richtung gesehen, in der es oder sie in das Werkstück oder zum Werkstück hin, also von außen nach innen, verläuft oder sich vom Betrachter entfernt, im Uhrzeigersinn windet, d.h. wenn der Windungssinn gleich dem Uhrzeigersinn ist oder einer Rechtsdrehung entspricht und als Linksgewinde oder linksgängig bei Windung gegen den Uhrzeigersinn oder in einer Linksdrehung, d.h. wenn der Windungssinn entgegengesetzt zum Uhrzeigersinn ist. Die gleiche Nomenklatur gilt für eine Schraubenlinie oder Helix allgemein.

Der Drehsinn des Werkzeugs und seiner Gewindeerzeugungsbereiche beim Erzeugen des Gewindes entspricht somit dem Windungssinn des Gewindes oder, mit anderen Worten, das Werkzeug wird so herum gedreht wie eine Schraube beim Eindrehen oder Einschrauben in das Gewinde, wenn es ein Innengewinde ist oder eine Mutter beim Aufdrehen oder Aufschrauben auf das Gewinde, wenn es ein Außengewinde ist.

In einer Ausführungsform sind die Gewindeschneidzähne im Windungssinn des zu erzeugenden Gewindes und der um die Werkzeugachse verlaufenden Schraubenlinie, auf der die Gewindeschneidzähne angeordnet sind, schneidend angeordnet und ausgebildet sind. Das bedeutet, wenn das zu erzeugende Gewinde rechtsgängig ist, schneiden die Gewindeschneidzähne auch nach rechts oder ebenfalls rechtsgängig, und wenn das zu erzeugende Gewinde linksgängig ist, schneiden die Gewindeschneidzähne auch nach links oder linksgängig. Der Drehsinn des Werkzeugs und seiner Gewindeerzeugungsbereiche beim Erzeugen des Gewindes entspricht somit dem Windungssinn des Gewindes oder, mit anderen Worten, das Werkzeug wird so herum gedreht wie eine Schraube beim Eindrehen oder Einschrauben in das Gewinde, wenn es ein Innengewinde ist, oder wie eine Mutter beim Aufdrehen oder Aufschrauben auf das Gewinde, wenn es ein Außengewinde ist. Dies entspricht dem Drehsinn eines bekannten Gewindebohrers.

In einer speziellen alternativen Ausführungsform gemäß der Erfindung sind die Gewindeschneidzähne jedoch entgegengesetzt zum Windungssinn des zu erzeugenden Gewindes und der Schraubenlinie um die Werkzeugachse, auf der die Gewindeschneidzähne angeordnet sind, schneidend angeordnet und ausgebildet.

Dies ist aufgrund der besonderen Gestaltung des Werkzeugs gemäß der Erfindung möglich, da die Gewindeschneidzähne zuvor durch die Nuten in der Werkstückwandung ohne Eingriff in die Werkstückwandung in das Werkstück oder auf das Werkstück zu bewegt werden können und dann erst beim Herausdrehen das Gewinde schneiden, im Gegensatz zu bekannten Gewindebohrern, die das Gewinde immer beim Hineindrehen schneiden.

Das bedeutet also, wenn das zu erzeugende Gewinde rechtsgängig ist, schneiden die Gewindeschneidzähne nach links oder linksgängig, und wenn das zu erzeugende Gewinde linksgängig ist, schneiden die Gewindeschneidzähne nach rechts oder rechtsgängig. Der Drehsinn des Werkzeugs und seiner Gewindeerzeugungsbereiche beim Erzeugen des Gewindes ist somit gerade entgegengesetzt zum Windungssinn des Gewindes oder, mit anderen Worten, das Werkzeug wird so herum gedreht wie eine Schraube beim Herausdrehen oder Ausschrauben aus dem Gewinde, wenn es ein Innengewinde ist, oder wie eine Mutter beim Abdrehen oder Abschrauben von einem Gewinde, wenn es ein Außengewinde ist.

Ein Vorteil des Werkzeugs gemäß der Erfindung gegenüber bekannten Gewindeschneid- oder Gewindefurchwerkzeugen besteht darin, dass das Gewindeerzeugungswerkzeug nicht einen üblicherweise bei Gewindebohrern oder Gewindefurchern vorhandenen Anlaufkegel oder Anschnittbereich mehr aufweisen muss, in dem der maximale radiale Abstand der Gewindezähne oder Drückstollen entlang einer Kegelfläche vom Ende des Gewindebohrers oder Gewindefurchers hin zunimmt. Dadurch kann auch bei einem Sackloch axial ein vollständiger Gewindegang entlang einer größeren Gewindelänge erzeugt werden, da der unvollständige Gewindegang, der über die Länge des Anschnittbereichs oder Anlaufkegels entstehen würde, wegfällt. Ferner können die Gewindeerzeugungswerkzeuge kürzer ausgebildet werden, was neben anderen Vorteilen insbesondere auch bei kleinen Arbeitshöhen positiv auswirkt.

Im Allgemeinen bestimmt das Außenprofil nur eines Gewindeschneidzahnes oder Gewindeformkeiles bereits das endgültige Gewindeprofil des von diesem Zahn oder Keil erzeugten Gewindegangabschnitts.

In einer besonderen Ausgestaltung ist jeder Gewindeerzeugungsbereich in wenigstens zwei versetzte Gewindeerzeugungsteilbereiche mit unterschiedlichen Gewindeaußenprofilen unterteilt, wobei insbesondere beliebige Gewindeaußenprofile in beliebiger Abfolge kombinierbar sind. Dadurch sind insbesondere unterschiedliche Klemmkräfte für die in ein mit diesem Gewindeerzeugungswerkzeug erzeugten Gewinde eingedrehte Schraube in den unterschiedlichen Gewindeteilbereichen, die den unterschiedlichen Gewindeerzeugungsteilbereichen entsprechen, einstellbar. Insbesondere ist eine größere Klemmwirkung für die eingedrehte Schraube in dem Gewindeteilbereich mit dem kleineren Gewindeprofil einstellbar.

In einer vorteilhaften Ausführungsform weist ein erster Gewindeerzeugungsteilbereich, vorzugsweise ein vorderer Gewindeerzeugungsteilbereich, der axial oder in Richtung zur Stirnseite hin vor einem hinteren Gewindeerzeugungsteilbereich liegt, ein Gewindeaußenprofil mit wenigstens teilweise kleineren Maßen oder Außenabmessungen, insbesondere am Profilkopf, aber ggf. auch an den Profilflanken, auf als ein zweiter Gewindeerzeugungsteilbereich, vorzugsweise der hintere Gewindeerzeugungsteilbereich.

Vorzugsweise kann nun die Schraube zunächst mit kleinerer Klemmwirkung oder leichtgängiger in den mit dem hinteren Gewindeerzeugungsteilbereich erzeugten hinteren Gewindeteilbereich eingedreht werden, um dann in dem mit dem vorderen Gewindeerzeugungsteilbereich erzeugten vorderen Gewindeteilbereich mit größerer Klemmwirkung oder schwergängiger mit festerem Sitz weitergedreht zu werden.

In einer speziellen Ausgestaltung hat jeder erste Gewindeerzeugungsteilbereich, insbesondere vordere Gewindeerzeugungsteilbereich in seinem Gewindeaußenprofil eine Abflachung im Profilkopf und/oder jeder zweite, insbesondere hintere, Gewindeerzeugungsteilbereich ein Gewindeaußenprofil, das einen radial weiter nach außen ragenden Profilkopf aufweist als das Gewindeaußenprofil des ersten Gewindeerzeugungsteilbereiches, insbesondere vorderen Gewindeerzeugungsteilbereiches.

In einer vorteilhaften Ausführungsform ist der Durchmesser eines Gewindeerzeugungsteilbereichs, insbesondere des ersten Gewindeerzeugungsteilbereiches oder des vorderen Gewindeerzeugungsteilbereiches, kleiner als der Durchmesser eines anderen Gewindeerzeugungsteilbereichs, insbesondere des zweiten Gewindeerzeugungsteilbereiches oder des hinteren Gewindeerzeugungsteilbereiches.

Solche Ausgestaltungen gemäß der Erfindung wären bei einem bekannten Gewindefurcher oder Gewindebohrer technisch nicht möglich.

Die Wandung des Werkstückes, in der das Gewinde erzeugt wird, ist bevorzugt eine Kernlochwandung eines Kernloches, insbesondere eines Sackloches oder eines Durchgangsloches, in dem Werkstück, so dass das Gewinde ein Innengewinde ist. Es ist aber auch die Erzeugung eines Außengewindes an einer äußeren Wandung des Werkstücks möglich.

Die Nuterzeugungsbereiche und/oder die Gewindeerzeugungsbereiche sind bevorzugt als vorgefertigte Teile, vorzugsweise lösbar oder auswechselbar, an einem Werkzeugträger oder Werkzeugschaft befestigt.

Die Erfindung wird im Folgenden anhand von Ausführungsbeispielen weiter erläutert. Dabei wird auch auf die Zeichnung Bezug genommen, in deren

FIG 1    ein Kernloch in einem Werkstück in einer Schnittdarstellung,

FIG 2    das Kernloch gemäß FIG 1 mit zwei in einem ersten Verfahrensschritt erzeugten Nuten in einer Schnittdarstellung,

FIG 3    das Kernloch gemäß FIG 2 mit in einem zweiten Verfahrensschritt eingebrachtem Werkzeug mit zwei in den Nuten befindlichen Gewindeerzeugungsbereichen in einer Schnittdarstellung,

FIG 4    das Kernloch gemäß FIG 3 mit eingebrachtem Werkzeug, das in einem dritten Verfahrensschritt um einen Drehwinkel gedreht und mit axialem Vorschub bewegt wird, wobei die Gewindeerzeugungsbereiche einen Teil eines Gewindeganges erzeugt haben, in einer teilweisen Schnittdarstellung,

FIG 5    das Kernloch gemäß FIG 3 und 4 mit eingebrachtem Werkzeug, das in dem dritten Verfahrensschritt um den vollen Drehwinkel gedreht und mit axialem Vorschub bewegt wurde, wobei die Gewindeerzeugungsbereiche den vollständigen Gewindegang erzeugt haben, in einer teilweisen Schnittdarstellung,

FIG 6    ein Werkstück mit einem Kernloch mit zwei gedrallten Nuten und fertig erzeugtem Gewinde zwischen den Nuten in einer perspektivischen Darstellung,

FIG 7    das Kernloch gemäß FIG 6 in einer Draufsicht und

FIG 8    das Kernloch gemäß FIG 7 in einer Schnittdarstellung gemäß der Linie VIII-VIII in FIG 7

FIG 9    ein spanlos arbeitendes Gewindeerzeugungswerkzeug mit zwei Gewindeerzeugungsbereichen,

FIG 10   ein spanlos arbeitendes Gewindeerzeugungswerkzeug in einer Stirnansicht,

FIG 11   ein kombiniertes Werkzeug mit zwei Gewindeerzeugungsbereichen und vorgelagerten Nuterzeugungsbereichen in einer perspektivischen Ansicht,

FIG 12   das Werkzeug gemäß FIG 11 in einer perspektivischen Seitenansicht,

FIG 13   das Werkzeug gemäß FIG 12 in einer Stirnansicht,

FIG 14   ein vorderer Teil des Werkzeuges gemäß FIG 11 bis 13 in einem Längsschnitt gemäß XV-XV in FIG 14,

FIG 15   ein vorderer Bereich des Gewindeerzeugungswerkzeug gemäß FIG 11 bis 14 in einem entlang der Gewindesteigung schräg geneigten Schnitt durch die vorderen Gewindezähne in Sicht nach vorne gemäß Linie XV-XV in FIG 14

FIG 16     ein weiteres kombiniertes Werkzeug in einer perspektivischen Seitenansicht,

FIG 17     ein Werkstück mit einem Sackloch mit zwei gedrallten Nuten und fertig erzeugtem Gewinde zwischen den Nuten, wobei die Nuten und das Gewinde vorzugsweise mit einem Werkzeug gemäß FIG 11 bis 15 erzeugt wurde, in einer perspektivischen Darstellung,

FIG 18     das Sackloch gemäß FIG 17 in einer Draufsicht,

FIG 19     das Sackloch gemäß FIG 17 in einer Schnittdarstellung gemäß der Linie XIX-XIX in FIG 18,

FIG 20     eine weitere Ausführungsform eines kombinierten Werkzeuges mit zwei Gewindeerzeugungsbereichen und vorgelagerten spanlosen Nuterzeugungsbereichen in einer perspektivischen Ansicht,

FIG 21     das Werkzeug gemäß FIG 20 in einer Stirnansicht und

FIG 22     ein Nuterzeugungswerkzeug in einer perspektivischen Ansicht

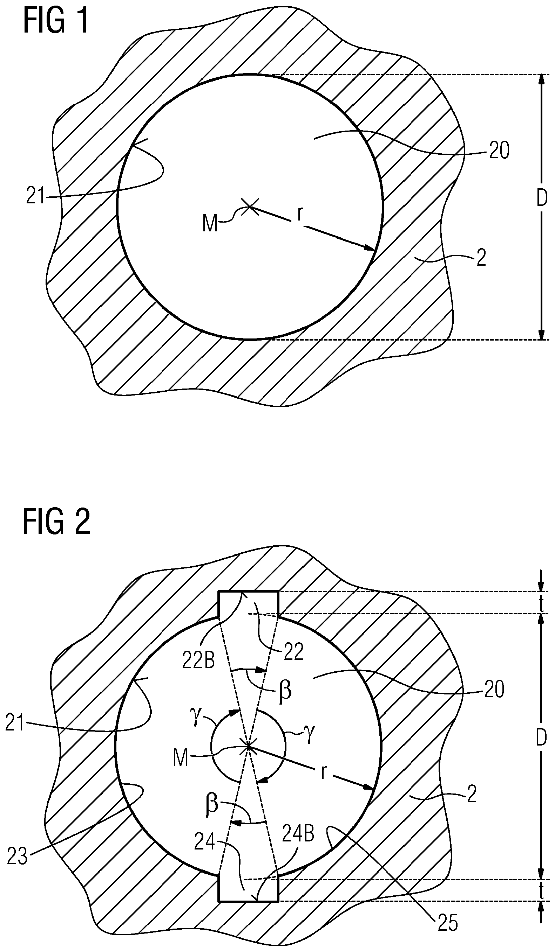

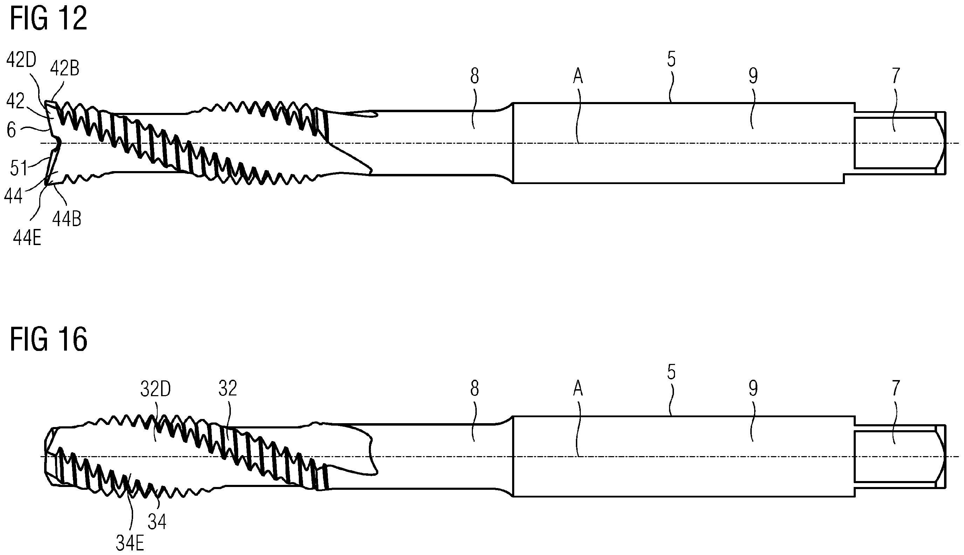

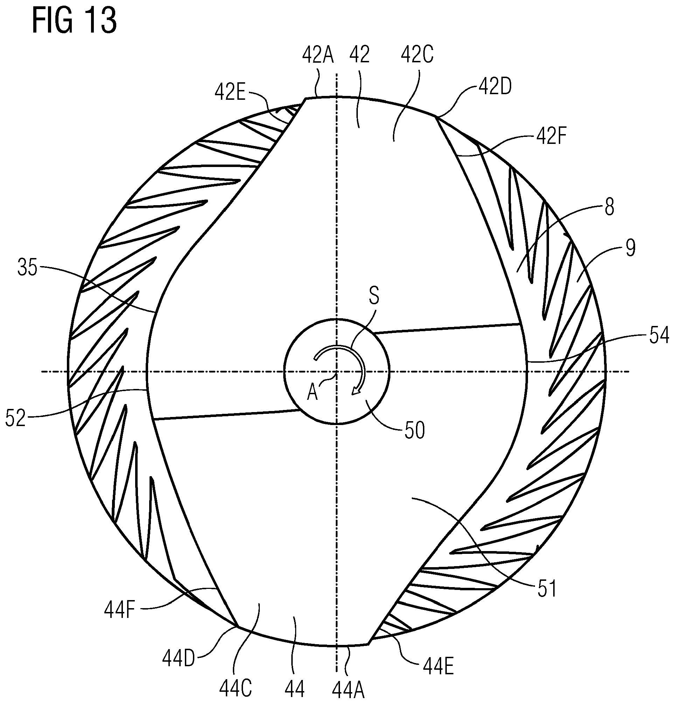

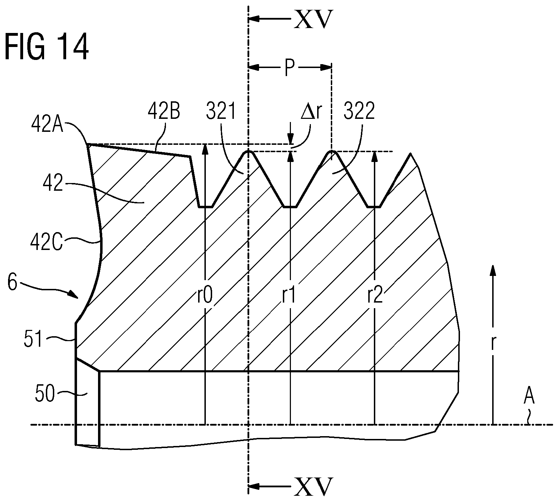

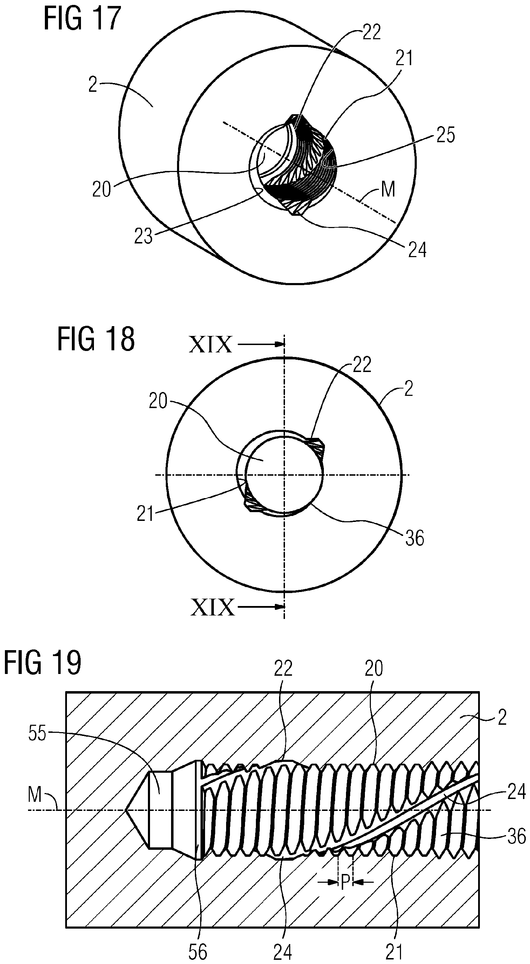

jeweils schematisch dargestellt sind. Einander entsprechende Teile und Größen sind in den FIG 1 bis 22 mit denselben Bezugszeichen versehen.

FIG 1 zeigt ein Kernloch 20 in einem Werkstück 2 in einem Schnitt, wobei das Kernloch 20 eine um eine Mittelachse M umlaufende zylindrische Kernlochwandung 21 aufweist mit dem Durchmesser D. Die zur Mittelachse M radiale Richtung ist mit einem Pfeil und dem Bezugszeichen r versehen.

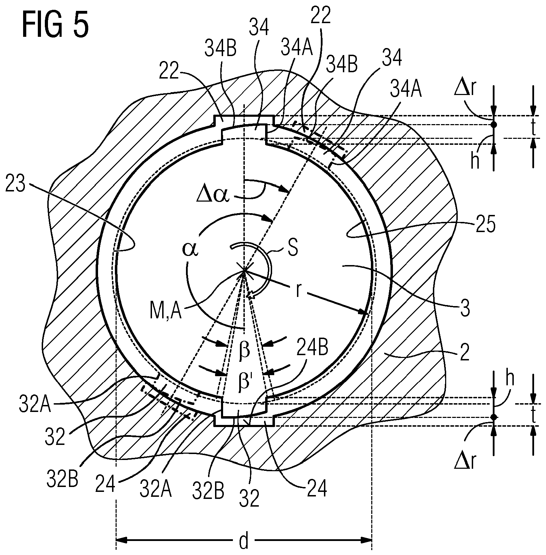

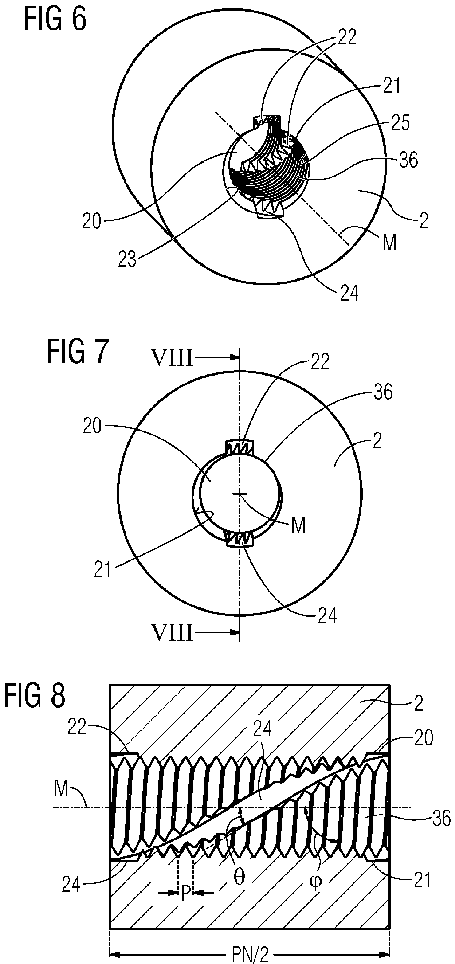

Gemäß FIG 2 werden nun in der Kernlochwandung 21 zwei gedrallte, vorzugsweise helikale oder schraubenlinienförmige, Nuten 22 und 24 erzeugt, die diametral zur Mittelachse M an entgegen gesetzten Seiten, also insbesondere um 180° versetzt zueinander, ausgebildet und angeordnet sind. Der Drall oder die Helizität der Nuten 22 und 24 ist in den reinen Schnittdarstellungen gemäß FIG 2 und FIG 3 bis 5 eigentlich nicht sichtbar, ist aber in FIG 5 schon zeichnerisch angedeutet und beispielsweise in FIG 6 und 8 sowie FIG 17 und 19 sehr gut zu erkennen und wird noch näher erläutert.

Die vom Außendurchmesser oder von der ursprünglichen zylindrischen Kernlochwandung 21 des Kernloches 20 gemessenen Tiefen der Nuten 22 und 24 sind mit t bezeichnet und bei beiden Nuten 22 und 24 vorzugsweise gleich. Der radial außen liegende Nutgrund der Nut 22 ist mit 22B und entsprechend der Nutgrund der Nut 24 mit 24B bezeichnet. Ein zwischen den Nuten 22 und 24 in FIG 2 gegen den Uhrzeigersinn verlaufender Wandungsteilbereich der Kernlochwandung 21 ist mit 23 bezeichnet und ein auf der anderen Seite zwischen den Nuten 22 und 24 liegender Wandungsteilbereich mit 25.

Der dem Umfangsanteil entsprechende Winkelanteil β einer Nut 22 oder 24 am Gesamtumfang des Kernloches 20 und dessen Kernlochwandung also 360° beträgt zwischen 2 % und 12,5 %, vorzugsweise zwischen 7,5 % und 10 % oder, in Winkelgraden angegeben, zwischen 7,2° und 45°, vorzugsweise zwischen 27° und 36°. Der dem verbleibenden Umfangsanteil entsprechende Winkelanteil γ jedes Wandungsteilbereichs 23 und 25 ist dann $(360° - 2\beta)/2 = 180° - \beta$.

Das Kernloch 20 gemäß FIG 1 wird vorzugsweise spanabhebend erzeugt, insbesondere mit einem Bohrwerkzeug oder einem Fräswerkzeug, und die Nuten 22 und 24 im Kernloch 20 gemäß FIG 2 im Anschluss mit einem gesonderten Werkzeug. Zum Erzeugen der beiden Nuten kann dann entweder ein gesondertes Nuterzeugungswerkzeug werden oder ein kombiniertes Nut- und Gewindeerzeugungswerkzeug, wie noch erläutert wird.

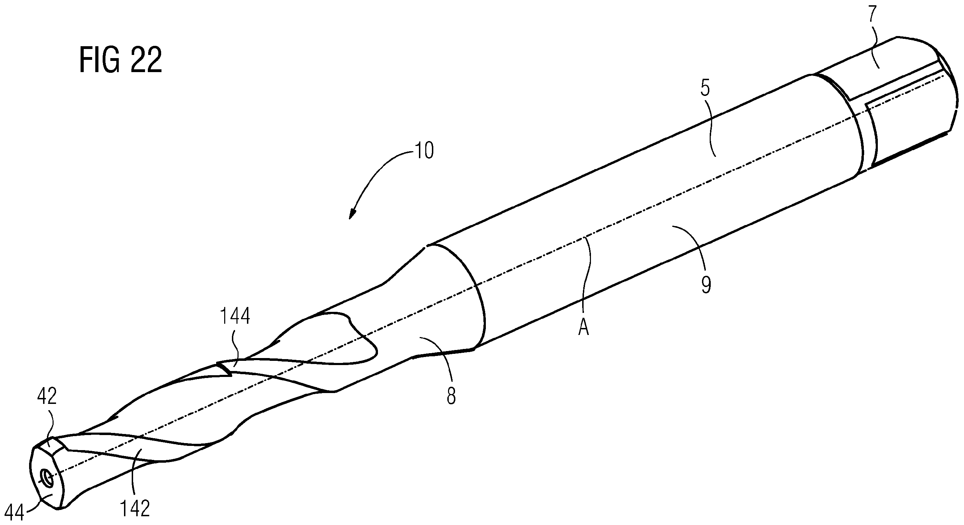

FIG 22 zeigt ein Ausführungsbeispiel eines Nuterzeugungswerkzeuges 10 mit gedrallten Nuterzeugungsbereichen 142 und 144, mit dem die gedrallten Nuten 22 und 24 in dem Kernloch 20 spanlos formend erzeugt werden können.

Es ist aber auch alternativ möglich, gleich das Kernloch 20 mit den Nuten 22 und 24 gemäß FIG 2 mit einem Werkzeug, beispielsweise einem Fräswerkzeug oder bei dünnen Werkstücken wie Blechen auch mit einem mit Drall bewegten Stanzwerkzeug, oder in einem Arbeitsschritt zu erzeugen, so dass also das Kernloch 20 gemäß FIG 1 entfällt.

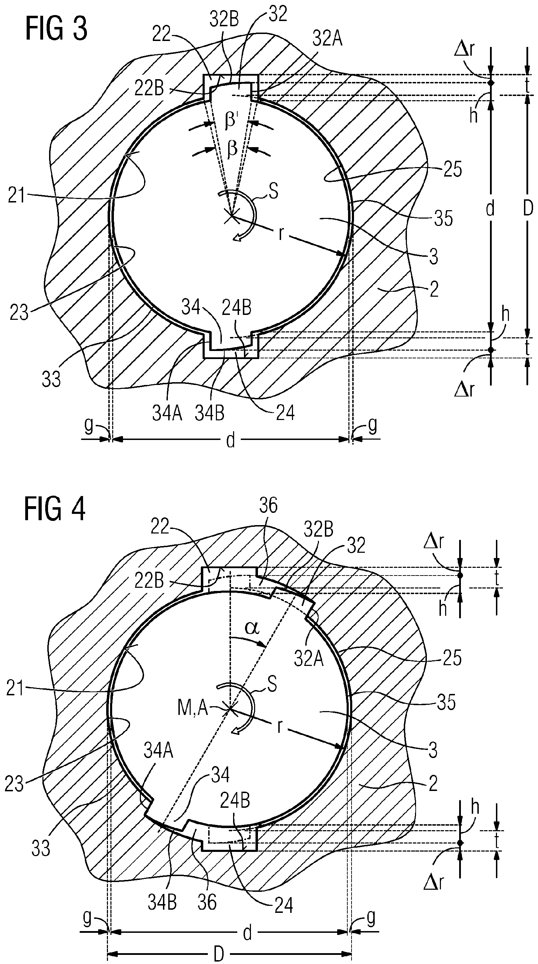

Anhand FIG 3 bis 5 wird nun das Erzeugen eines Gewindes in dem mit den Nuten 22 und 24 versehenen Kernloch 20 gemäß FIG 2 erläutert.

Gemäß FIG 3 ist ein um seine Werkzeugachse A drehbares Werkzeug 3 mit zur Mittelachse M des Kernloches 20 koaxialen Werkzeugachse A in das Kernloch 20 eingeführt. Das Werkzeug 3 weist zwei diametral zur Werkzeugachse A oder um 180° versetzt zueinander angeordnete Gewindeerzeugungsbereiche 32 und 34 auf und zwischen den Gewindeerzeugungsbereichen 32 und 34 zwei, hier insbesondere zylindrische, Außenflächen 33 und 35.

Beim Einführen der Gewindeerzeugungsbereiche 32 und 34 in die Nuten 22 und 24 folgen die Gewindeerzeugungsbereiche 32 und 34 dem Drall oder der Helizität der Nuten 22 und 24, vorzugsweise durch die Bewegungssteuerung durch eine entsprechend helikale Bewegung durch Überlagerung aus axialem Vorschub und Drehbewegung. Die Vorschubgeschwindigkeit dieser axialen Vorschubbewegung beim Einführen des Werkzeugs 3 und seiner Gewindeerzeugungsbereiche 32 und 34 in die Nuten 22 und 24 des Kernlochs 20 ist angepasst an die Drehgeschwindigkeit der Drehbewegung und die Drallsteigung oder Steigung der Helix der Nuten 22 und 24, derart dass in der gleichen Zeit, in der das Werkzeug 3 sich um eine volle Umdrehung drehen würde, der axiale Vorschub oder der axiale Weg genau der Drall- oder Helixsteigung entspräche. Die axiale Vorschubgeschwindigkeit des Werkzeugs 3 beim Einführen in die gedrallten Nuten 22 und 24 entspricht also dem Produkt aus der Drallsteigung der Nuten 22 und 24 und der Drehfrequenz des Werkzeugs 3.

Es ist aber auch denkbar, die Nuten 22 und 24 die Gewindeerzeugungsbereiche 32 und 34 in der helikalen Bewegung führen zu lassen bei einem rein axialen Vorschub und gleichzeitigem Zulassen einer gewissen Drehung des Werkzeugs 3 entgegengesetzt zum Drall der Nuten 22 und 24.

Die Drehung des Werkzeugs 3 bei der gedrallten oder helikalen Einführbewegung in die gedrallten Nuten 22 und 24 ist in ihrem Drehsinn an die Drallrichtung oder den Drehsinn der Helix der Nuten 22 und 24 angepasst und kann der dargestellte Drehrichtung S (für die Gewindeerzeugung) oder auch der entgegen gesetzten Drehrichtung entsprechen.

Die Gewindeerzeugungsbereiche 32 und 34 ragen radial weiter nach außen als die Außenflächen 33 und 35. Der Durchmesser des Gewindeerzeugungswerkzeugs 3 von Außenfläche 33 zu Außenfläche 35 ist mit d bezeichnet.

Die Gewindeerzeugungsbereiche 32 und 34 weisen auf einer dem zu erzeugenden Gewinde in der Gewindesteigung entsprechenden Spirale oder Schraubenlinie oder Helix um die Werkzeugachse A angeordnete Gewindeschneidzähne 32A bzw. 34A (von denen in FIG 3 jeweils nur einer im Schnitt zu sehen ist) und sich an die Gewindeschneidzähne 32A bzw. 34A anschließende äußere Freiflächen 32B und 34B auf. In FIG 3 sind die Gewindeschneidzähne 32A und 34A in einer Drehrichtung S um die Werkzeugachse A gesehen vorne angeordnet und verlaufen die Freiflächen 32B und 34B von den Gewindeschneidzähnen 32A und 34A jeweils nach hinten. Die Gewindeschneidzähne 32A und 34A sind die radial am Weitesten nach außen ragenden Bereiche der Gewindeerzeugungsbereiche 32 und 34 des Gewindeerzeugungswerkzeugs 3. Die radiale Höhe des Gewindeschneidzahns 32A oder 34A gegenüber dem sonstigen Außenumfang des Gewindeerzeugungswerkzeugs 3, also insbesondere gegenüber dessen Außenflächen 33 und 35, ist mit h bezeichnet und bevorzugt bei beiden Gewindeerzeugungsbereichen 32 und 34 gleich.

Der radiale Abstand der Gewindeschneidzähne 32A und 34A zum jeweiligen Nutgrund 22B bzw. 24B der jeweiligen Nut 22 oder 24 ist mit $\Delta$r bezeichnet und vorzugsweise ebenfalls gleich bei beiden Nuten 22 und 24. Dieser radiale Abstand $\Delta$r ist typischerweise zwischen 1/20 und 1/5 der Nuttiefe t gewählt.

Der Gewindeerzeugungsbereich 32 ragt in radialer Richtung r in die Nut 22 und der Gewindeerzeugungsbereich 34 in die Nut 24. Es gilt also für die jeweiligen Abmessungen d < D und d/2 + h < D/2 + t.

Der radiale Abstand oder die Spaltbreite zwischen dem Wandungsteilbereich 23 der Kernlochwandung 21 und der zugewandten Außenfläche 33 des Gewindeerzeugungswerkzeugs 3 sowie dem Wandungsteilbereich 25 der Kernlochwandung 21 und der ihr zugewandten Außenfläche 35 des Werkzeugs 3 ist mit g bezeichnet und entspricht g = (D - d) / 2. Diese Spaltbreite g sowie auch der radiale Abstand $\Delta$r zwischen Freifläche 32B oder 34B und Nutgrund 22B bzw. 24B sind jeweils zum Zwecke der besseren Darstellung vergrößert dargestellt.

Im Regelfall wird das Spiel zwischen dem Gewindeerzeugungswerkzeug 3 einerseits und der Kernlochwandung 21 des Kernlochs 20 oder den Nuten 22 und 24 andererseits kleiner bemessen sein. Bevorzugt ist 0,01 < g/D < 0,1, jedoch können auch andere Parameterverhältnisse gewählt werden.

Der jeweilige Winkelanteil (oder Erstreckung in Umfangsrichtung oder Öffnungswinkel) $\beta$' jedes Gewindeerzeugungsbereichs 32 und 34 ist wie in FIG 3 gezeigt, kleiner als der Winkelanteil $\beta$ der zugehörigen Nut 22 oder 24, um ein Spiel in Umfangsrichtung zwischen Gewindeerzeugungsbereich 32 und 34 und Nut 22 und 24 und ein reibungsarmes Einführen der Gewindeerzeugungsbereiche 32 und 34 in die Nuten 22 und 24 zu ermöglichen und Beschädigungen an Werkzeug oder Werkstück zu vermeiden.

In Abweichung von der Darstellung kann der Gewindeerzeugungsbereich auch schmaler gewählt werden, also mit geringerem Winkelanteil $\beta$', und vorzugsweise die Nut entsprechend.

FIG 4 zeigt nun das während der Gewindeerzeugung in der Drehrichtung S um einen Winkel $\alpha$ gegenüber der in FIG 3 gezeigten Stellung gedrehte Werkzeug 3 in dem Kernloch 20 des Werkstücks 2.

Zusätzlich zur Drehbewegung in der Drehrichtung S wird bei der Gewindeerzeugung das Werkzeug 3 in einer axialen oder linearen Vorschubbewegung koaxial zur Werkzeugachse A und auch zur Mittelachse M nach innen in das Kernloch 20 bewegt, was im Schnitt in FIG 4 nicht zu erkennen ist. Die Vorschubgeschwindigkeit dieser axialen Vorschubbewegung ist angepasst an die Drehgeschwindigkeit der Drehbewegung in der Drehrichtung S und die gewünschte Gewindesteigung P sowie den Drall der Nuten 22 und 24.

Durch die Drehbewegung um den Drehwinkel $\alpha$ des Gewindeerzeugungswerkzeugs 3 bei gleichzeitiger axialer Vorschubbewegung wurde ein Teil des Gewindeganges 36 des Gewindes in der Kernlochwandung 21 des Kernlochs 20 erzeugt und zwar ausgehend von der Nut 22 in dem Wandungsteilbereich 25 und ausgehend von der Nut 24 in dem Wandungsteilbereich 23. Zur Verdeutlichung ist der gesamte schon erzeugte Teilbereich in einem Umlauf des erzeugten Gewindeganges 36 auch im dargestellten Schnitt in FIG 4 gezeigt, auch wenn dieser streng genommen im Schnitt verborgen wäre.

Bevorzugt sind in jedem Gewindeerzeugungsbereich 32 und 34 jeweils mehrere in einer helikalen Reihe entsprechend dem Drall der Nuten 22 und 24 zueinander versetzt angeordnete Gewindeschneidzähne 32A und 34A auf. Entsprechend der Anzahl der Gewindeschneidzähne 32A und 34A jedes Gewindeerzeugungsbereiches 32 und 34 wird bei einer halben Umdrehung um $\alpha$ = 180° des Gewindeerzeugungswerkzeugs 3 bei gleichzeitigem Vorschub um P/2 eine der Anzahl der Gewindeschneidzähne in der helikalen Reihe entsprechende Zahl von Gewindeumläufen des Gewindeganges 36 erzeugt, die jeweils durch die Nuten 22 und 24 unterbrochen sind. Die Gewindeschneidzähne 32A und 34A, die diametral unmittelbar gegenüber liegen, sind dabei jeweils um P/2 versetzt angeordnet, damit die beiden separat erzeugten halben Umläufe des Gewindegangs 36 im Wandungsbereich 23 und im Wandungsbereich 25 dann nach der Nut 22 und 24 entlang des gewünschten Gewindeverlaufs in der Schraubenlinie mit der Gewindesteigung P ineinander übergehen.

Die radiale Höhe h des Gewindeschneidzahns 32A oder 34A bestimmt dabei den Abstand des Gewindegrunds 36B des Gewindeganges 36 von der Kernlochwandung 21.

Eine funktional vollständige Umdrehung des Werkzeugs 3 derart, dass jeder Gewindeschneidzahn 32A und 34A ausgehend von der Nut 22 bzw 24 in der nächsten Nut 24 bzw. 22 landet, deckt dabei die gesamten dazwischen liegenden Wandungsteilbereiche 23 und 25 ab, so dass in diesen der Gewindegang 36 vollständig erzeugt wird.

Der Zustand nach einer solchen funktional vollständigen Umdrehung ist in FIG 5 gezeigt. Der Gewindeerzeugungsbereich 32, der zuvor in die Nut 22 ragte, ragt nun in die diametral gegenüberliegende Nut 24 und der Gewindeerzeugungsbereich 34, der zuvor in die Nut 24 ragte, ragt nun in die Nut 22, beide unter dem radialen Abstand $\Delta r$ zum Nutgrund 24B bzw. 22B.

Dadurch kann nun in einem weiteren Schritt das Gewindeerzeugungswerkzeug 3 in einer helikalen Ausführbewegung um die Mittelachse M entsprechend dem Drall der gedrallten Nuten 22 und 24 wieder aus dem Kernloch 20 herausgezogen werden, da die Gewindeerzeugungsbereiche 32 und 34 entlang der gedrallten Nuten 24 und 22 ohne Beschädigung des erzeugten Gewindeganges 36 wieder in einer helikalen oder gedrallten Ausführbewegung nach außen bewegt werden können.

Der Drehwinkel $\alpha$ für eine solche funktional vollständige Umdrehung des Werkzeugs 3 zwischen den zwei Nuten 22 und 24 beträgt nun aufgrund des Dralls der Nuten 22 und 24 nicht nur 180° wie dies bei geraden axialen Nuten der Fall wäre, sondern ist um eine Drehwinkelkorrektur $\Delta \alpha$ zu korrigieren, die von der Drallsteigung der Nuten 22 und 24 einerseits und von der Gewindesteigung andererseits abhängt.

Bei allgemein einer Anzahl n >= 1 von Nuten und bei einer äquidistanten oder gleichmäßigen Teilung der Nuten in der Kernlochwandung 21, also einem Abstandswinkel von 360°/n, beträgt der Drehwinkel $\alpha$ für eine funktional vollständige Umdrehung des Werkzeugs 3 zwischen den zwei Nuten 22 und 24

$$\alpha = 360°/n + \Delta \alpha$$

wobei

$$\Delta \alpha = 360°/n \cdot P/(PN-P)$$

oder anders ausgedrückt

$$\alpha = 360°/n \left( 1 + P/(PN-P)\right)$$

mit der Gewindesteigung P des zu erzeugenden Gewindes und der Drallsteigung PN der Nuten, also dem axialen Weg bei einem vollständigen Umlauf der Nut 22 oder 24 um die Mittelachse M, wobei P und PN positiv bei einem Rechtsgewinde oder einem Rechtsdrall und negativ bei einem Linksgewinde oder Linksdrall gewählt sind. Die Korrektur bestimmt sich also nach dem Quotienten P / (PN - P) aus P und PN - P.

Bei einer nicht äquidistanten Anordnung oder ungleichen Teilung der Nuten ist in der Regel eine volle Umdrehung um mindestens 360° notwendig, um die Gewindeerzeugungsbereiche wieder in die Nuten zu bringen und das Werkzeug herausziehen zu können, es sei denn es liegt eine Achsensymmetrie oder eine n-zählige Drehsymmetrie vor, bei der schon bei einem kleineren Drehwinkel jeder Gewindeerzeugungsbereich wieder in eine zugehörige Nut ragt. Die vorgenannte Drehwinkelkorrektur $\Delta \alpha$ ist auch im nicht äquidistanten Fall oder bei ungleicher Teilung gültig.

Der Drallsinn oder Umlaufsinn der Nuten ist bevorzugt gleich zum Drall- oder Umlaufsinn des Gewindes, also beide rechts oder beide links herum gedrallt, da dann die Drehrichtung des Werkzeuges zwischen Nuterzeugung und Gewindeerzeugung nicht gewechselt werden muss. Es ist aber auch möglich, entgegen gesetzte Drall- oder Umlaufsinne zu wählen, also Rechtsdrall für Gewinde und Linksdrall für Nuten oder umgekehrt.

Ein Vorteil besteht darin, dass das Werkzeug 3, das letztendlich ein modifizierter Gewindebohrer ist, keinen Anlaufkegel oder Anschnittbereich aufweisen muss, in dem der maximale radiale Abstand der Gewindeschneidzähne entlang einer Kegelfläche vom Ende des Gewindebohrers hin zunimmt, um einen entsprechenden Zuwachs des Spans und der Eindringtiefe der Gewindeschneidzähne in die Werkstückoberfläche zu erreichen und den Schnittdruck nicht zu hoch werden zu lassen.

Beim Werkzeug 3 gemäß der Erfindung, das mit seinen Gewindeerzeugungsbereichen 32 und 34 in die vorab erzeugten Nuten 22 und 24 eingreift, kann der Gewindegang vielmehr gleich in voller Gewindeprofiltiefe gemäß der radialen Höhe h der Gewindeschneidzähe 32A und 34A erzeugt werden und über die axiale Gewindelänge des Gewindes gesehen geht auch bei einem Sackloch als Kernloch 20 kein Teilbereich mit einem unvollständigen Gewindegang verloren, der ansonsten durch den Anschnitt oder Anlaufkegel des Gewindebohrers bei konventionellen Gewindebohrern entsteht. Der auch bei teilweiser Umdrehung erzeugte Gewindegang 36 ist deshalb vollständig, und zwar über seine gesamte axiale Gewindelänge. Dies ist ein Vorteil, der den gewissen Festigkeitsnachteil durch die Unterbrechungen des Gewindeganges 36 im Bereich der beiden Nuten 22 und 24 mehr als wettmachen kann.

Außerdem kann trotz des zusätzlichen Schrittes zur Erzeugung der Nuten 22 und 24 der eigentliche Gewindeerzeugungsprozess in einer kürzeren Zeit durchgeführt werden als mit konventionellen Gewindebohrern in einem kreisrunden Kernloch ohne Nuten 22 und 24.

Die gedrallten Nuten haben gegenüber den aus dem Stand der Technik bekannten geraden Nuten den Vorteil, dass die beim Nuterzeugen erforderlichen Axialkräfte reduziert werden. Durch den Drall wird der Axialkraft ein Drehmoment überlagert, was sich dämpfend auf die Axialbelastung einer Werkzeugspindel auswirkt. Bei spanender Nuterzeugung können in den gedrallten Nuten die erzeugten Späne besser nach vorne abgeführt werden.

Ferner kann durch die Nuten 22 und 24 in vorteilhafter Weise Kühl- und/oder Schmiermittel, insbesondere in Form von Öl oder Öl-Aerosol, zum Ort der Gewindeerzeugung geführt oder geleitet werden und auch zur Abfuhr der Späne verwendet werden. Ferner können auch zumindest die zuletzt erzeugten Späne von dem Gewindeschneidzahn in die jeweilige Nut 22 oder 24 eingebracht werden und dort mit vergleichsweise großem Volumen mit dem Kühl- und/oder Schmiermittel abgeführt.

Zum Transport von Kühl- und/oder Schmiermittel zu bzw. von den Gewindeerzeugungsbereichen 32 und 34 bzw. zum Abtransport von Spänen von spanenden Gewindeerzeugungsbereichen 32 und 34 kann das Gewindeerzeugungswerkzeug 3 auch an oder zu den Gewindeerzeugungsbereichen 32 und 34 verlaufende Außennuten und/oder innere Kanäle aufweisen, die nicht dargestellt sind.

Das Kernloch 20 kann in den FIG 1 bis 5 sowohl ein Durchgangsloch als auch ein Sackloch sein. Die Wandung des Werkstücks kann somit wie dargestellt die Innenwandung eines durchgehenden oder nicht durchgehenden Loches in dem Werkstück sein zur Herstellung eines Innengewindes. Das Werkzeug kann aber ebenso zur Herstellung eines Außengewindes verwendet werden, wobei dann die Nuten und anschließend das Gewinde in der Außenwandung eines Schaftes oder Bolzens oder dergleichen erzeugt werden und die Gewindeerzeugungsbereiche des Gewindeerzeugungswerkzeuges entsprechend an einer Innenfläche angeordnet oder nach innen gerichtet sind und von außen in die Außenwand des Werkstücks eingreifen. Das Gewindeerzeugungswerkzeug ist dann auch im Durchmesser größer als die Wandung des Werkstücks, während es bei einem Innengewinde kleiner ist.

Die FIG 6 bis 8 zeigen ein mit dem Werkzeug gemäß der Erfindung erzeugtes Gewinde in einem Durchgangsloch als Kernloch 20 bei bereits herausgezogenem Gewindeerzeugungswerkzeug 3.

Der Gewindegang 36 ist vollständig in den Wandungsteilbereichen 23 und 25 der Kernlochwandung 21 des Kernlochs 20 erzeugt und nur im Bereich der Nuten 22 und 24 unterbrochen. Die Mittelachse M des Kernloches 20 ist nun die Gewindeachse des erzeugten Gewindes mit dem (unterbrochenen) Gewindegang 36.

In FIG 8 ist auch die Gewindesteigung P und der Gewindesteigungswinkel $\varphi$ (gegenüber der Querschnittsebene senkrecht zur Mittelachse M) des Gewindeganges 36 eingezeichnet sowie zum Vergleich die Nutdrallsteigung PN, von der die Hälfte PN/2 gezeigt ist, und der Nutdrallwinkel $\theta$ (gegenüber der Querschnittsebene senkrecht zur Mittelachse M) der insoweit sichtbaren gedrallten Nut 24.

Die Helix der Nuten wird im Allgemeinen deutlich weiter und steiler gewählt als die Helix des Gewindes, um den schon beschriebenen und bei geraden Nuten wie beim Stand der Technik besonders großen Zeitvorteil beim Prozess gegenüber konventionellem Gewindebohren oder Gewindefurchen auch mit gedrallten Nuten erzielen und beibehalten zu können.

Das bedeutet, dass die Gewindesteigung P, die insbesondere dem Abstand oder der Steigung zweier Gewindezähne Gewindeerzeugungsbereiche 32 und 34 des Werkzeugs 3 entspricht, deutlich kleiner als die Nutdrallsteigung PN, die vorzugsweise der Steigung der gedrallten Gewindeerzeugungsbereiche 32 und 34 des Werkzeugs 3 entspricht, gewählt wird, im Allgemeinen PN > 4 P, insbesondere PN > 6 P, vorzugsweise PN > 18 P, wobei auch PN > 36 P gewählt sein kann, und/oder der Gewindesteigungswinkel $\varphi$ des Gewindeganges 36, entsprechend dem Winkel von einem auf der Gewindelinie liegenden Gewindezahn zum nächsten auf der Gewindelinie liegenden Gewindezahn, gemessen zur Mittelachse M bzw. Werkzeugachse A, deutlich größer ist als der Nutdrallwinkel $\theta$, der insbesondere dem Drallwinkel der gedrallten Gewindeerzeugungsbereiche 32 und 34 des Werkzeugs 3 entspricht und ebenfalls zur Mittelachse M bzw. Werkzeugachse A gemessen ist, insbesondere $\varphi > 2\,\theta$, vorzugsweise $\varphi > 4\,\theta$.

Bevorzugte absolute Werte für den Nutdrallwinkel $\theta$ liegen im Allgemeinen zwischen 2° und 70°, insbesondere zwischen 5° und 45° und vorzugsweise zwischen 7° und 25°.

Bevorzugte absolute Werte für den Gewindesteigungswinkel $\varphi$ liegen im Allgemeinen zwischen 80° und 89,5°, bevorzugt zwischen 85° und 89°.

In einer weiteren Ausführungsform kann als Gewindeerzeugungswerkzeug anstelle eines erfindungsgemäß modifizierten Gewindebohrers, wie anhand von FIG 3 bis 5 gezeigt, auch ein erfindungsgemäß modifizierter Gewindefurcher vorgesehen werden, bei dem die Gewindeerzeugungsbereiche radial nach außen ragende Drückstollen oder Furchzähne statt Gewindeschneidzähnen aufweisen. Die Drückstollen oder Furchzähne erzeugen den Gewindegang bei der Drehbewegung und gleichzeitigen axialen Vorschubbewegung des Gewindeerzeugungswerkzeugs spanlos durch plastisches Eindrücken in die Kernlochwandung 21. Die Drückstollen können insbesondere in der Mitte der Gewindeerzeugungsbereiche angeordnet sein wieder in einem radialen Abstand zum jeweiligen Nutgrund der Nuten.

Hinsichtlich der Arbeitsbewegungen und Geometrie gelten die vorherigen Ausführungen weitgehend analog, wenn man den Gewindeschneidzahn 32A und 32B durch einen Gewindeformzahn oder Drückstollen ersetzt.

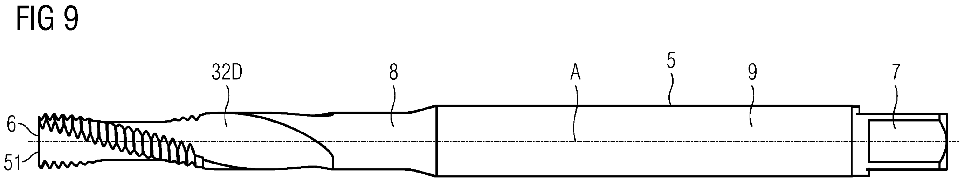

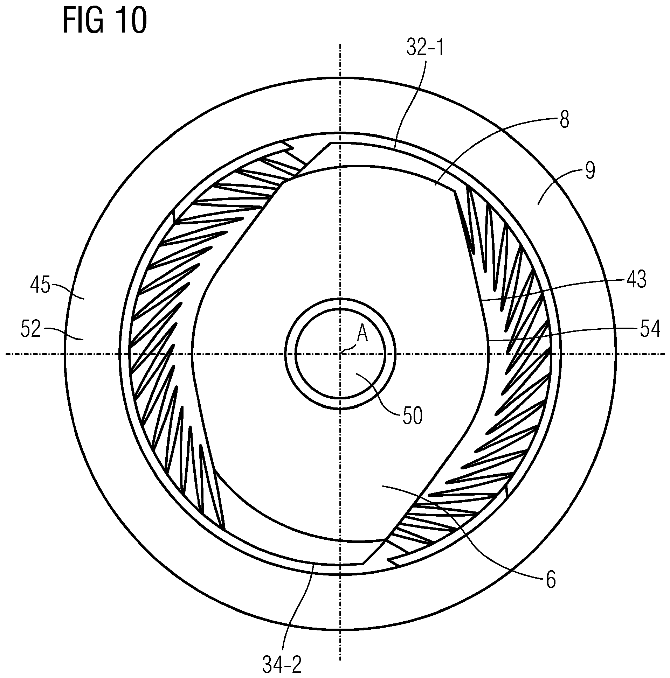

FIG 9 und 10 zeigen ein Ausführungsbeispiel eines solchen als spanlos arbeitender Gewindefurcher ausgebildeten Gewindewerkzeuges 3 gemäß der Erfindung ohne Nuterzeugungsbereich, mit dem in ein Kernloch 20 mit bereits erzeugten gedrallten Nuten 22 und 24 ein Gewinde erzeugt wird.

Das Gewindewerkzeug 3 umfasst einen Schaft 5, der einen, beispielsweise zylindrisch ausgebildeten, hinteren Abschnitt 9 und einen vorderen Abschnitt 8, der im Durchmesser im Anschluss an den hinteren Abschnitt 9 verjüngt ist, aufweist und durch den zentral die Werkzeugachse A verläuft. Am Ende des hinteren Abschnitts 9 ist ein Vierkant 7 oder ein anders ausgebildeter Einspannbereich zum Einspannen des Schaftes 5 in ein Spannmittel, insbesondere ein Spannfutter oder eine Spannzange, einer Werkzeugmaschine zum Antreiben des Gewindewerkzeuges 3, insbesondere zum Rotieren um die Werkzeugachse A, ausgebildet.

Der vordere Abschnitt 8 weist zur vom hinteren Abschnitt 9 abgewandten oder vorne angeordneten Stirnseite 6 (oder: zum freien Ende) hin zwei Gewindeerzeugungsbereiche 32 und 34 auf, die in Form von jeweils gedrallt um die Werkzeugachse A verlaufenden Reihen von Gewindeerzeugungsstegen ausgebildet sind und an entgegen gesetzten Seiten der Werkzeugachse A diametral zueinander angeordnet sind.

Die Gewindeerzeugungsstege verlaufen entlang der Gewindesteigung des gewünschten Gewindes und sind somit um den Gewindesteigungswinkel geneigt relativ zu einer zur Werkzeugachse A orthogonalen Ebene und weisen jeweils einen radial zur Werkzeugachse A am Weitesten nach außen ragenden Drückstollen oder Formkeil auf zum plastischen Eindrücken des Gewindeganges in das Werkstück.

Die Drückstollen der von der Stirnseite 6 aus gesehen ersten drei Gewindeerzeugungsstege des Gewindeerzeugungsbereichs 32 sind in FIG 9 mit 32-1, 32-2 und 32-3 und des Gewindeerzeugungsbereichs 34 mit 34-1, 34-2 und 34-3 bezeichnet. In FIG 10 sind nur die vordersten Drückstollen 32-1 und 34-1 zu sehen.

Die Radien oder Abstände von der Werkzeugachse A der Gewindeerzeugungsstege der beiden Gewindeerzeugungsbereiche 32 und 34 sind konstant oder gleich zueinander. Damit sind auch die Radien am Weitesten vorne an der Stirnseite 6 liegenden Formkeile oder Drückstollen 32-1, 32-2 und 32-3 sowie 34-1, 34-2 und 34-3 zueinander gleich. Der Gewindefurcher oder das Gewindeerzeugungswerkzeug 3 sowohl gemäß FIG 9 als auch gemäß FIG 10 weist somit keinen Anfurchkegel und damit keinen zunehmenden Radius bei den ersten Gewindeformkeilen auf. Vielmehr sind die Radien der Drückstollen sämtlicher Gewindeerzeugungsstege in jedem der Gewindeerzeugungsbereiche 32 und 34 gleich oder konstant über die gesamte axiale Länge. Die am Weitesten nach außen ragenden Formkeile oder Drückstollen, einschließlich der Drückstollen 32-1, 32-2 und 32-3 der Gewindeerzeugungsstege liegen also auf einer Stollenachse B, die parallel oder mit gleichem radialen Abstand zur Werkzeugachse A verläuft. Das Gleiche gilt für die Gewindeerzeugungsstege mit den Drückstollen 34-1 bis 34-4 des Gewindeerzeugungsbereiches 34.

Die beiden Gewindeerzeugungsbereiche 32 und 34 sind durch dazwischen liegende Außenflächen 33 und 35 getrennt, die einen geringeren Radius von der Werkzeugachse A oder einen geringeren Außendurchmesser haben als die Gewindeerzeugungsbereiche 32 und 34, also gegenüber diesen radial zurückversetzt sind. Die Gewindeerzeugungsbereiche 32 und 34 sind somit die im vorderen Abschnitt 8 des Gewindeerzeugungswerkzeugs 3 radial am Weitesten nach außen ragenden Teile und die Außenflächen 33 und 35 bilden Freiräume zwischen den Gewindeerzeugungsbereichen 32 und 34.

Jede Außenfläche 33 und 35 des Gewindeerzeugungswerkzeugs 3 zwischen dessen Gewindeerzeugungsbereichen 32 und 34 hat eine spezielle Form und wölbt sich konvex nach außen in Auswölbungen 52 und 54. Durch die konvexen Auswölbungen 52 und 54 wird eine gute Steifigkeit erreicht.

Die Durchmesser oder Radien der Gewindeerzeugungsstege der beiden Gewindeerzeugungsbereiche 32 und 34 sind konstant, d. h. die Außenradien der nach außen ragenden Formkeile 32-1, 32-2 und 32-3, die am Weitesten vorne an der Stirnseite 6 liegen, sind jeweils gleich. Der Gewindefurcher oder das Gewindeerzeugungswerkzeug 3 weist somit keinen Anfurchkegel oder Anlaufbereich mit einem zunehmenden Außenradius bei den ersten Gewindeformkeilen zur sukzessiven Vertiefung oder Einarbeitung des Gewindeganges am Gewindegrund auf. Vielmehr sind die Radien sämtlicher Gewindeerzeugungsstege und deren Formkeile in jedem der Gewindeerzeugungsbereiche 32 und 34 gleich oder konstant über die gesamte axiale Länge, was anhand der ersten drei Gewindeerzeugungsstege 32-1, 32-2 und 32-3 gezeigt ist. Die am Weitesten nach außen ragenden Formkeile oder Drückstollen der Gewindeerzeugungsstege liegen also auf einer Stollenachse B, die parallel oder mit gleichem radialen Abstand zur Werkzeugachse A verläuft. Das Gleiche gilt für die Gewindeerzeugungsstege des Gewindeerzeugungsbereiches 34 (nicht in FIG 9 dargestellt). Die spezielle Form der Freiräume 52 und 54 sowie der Gewindeerzeugungsbereich 32 und 34 erlaubt die Verwendung des Gewindefurchwerkzeugs 3 gemäß FIG 9 oder FIG 10 zur Gewindeerzeugung gemäß der Erfindung oder auch den FIG 1 bis 8, wobei die Gewindeerzeugungsbereiche 32 und 34 in die vorab erzeugten Nuten 22 und 24 im Werkstück 2 mit Drall eingeführt werden und dann das Gewindeerzeugungswerkzeug 3 in der beschriebenen Art und Weise gedreht wird, bis die Gewindeerzeugungsbereiche 32 und 34 wieder in den zugehörigen Nuten oder in den gegenüberliegenden Nuten 22 und 24 oder 24 und 22 zu liegen kommen, wonach das Werkzeug 3 wieder aus dem Werkstück 2 mit Drall herausgezogen werden kann.

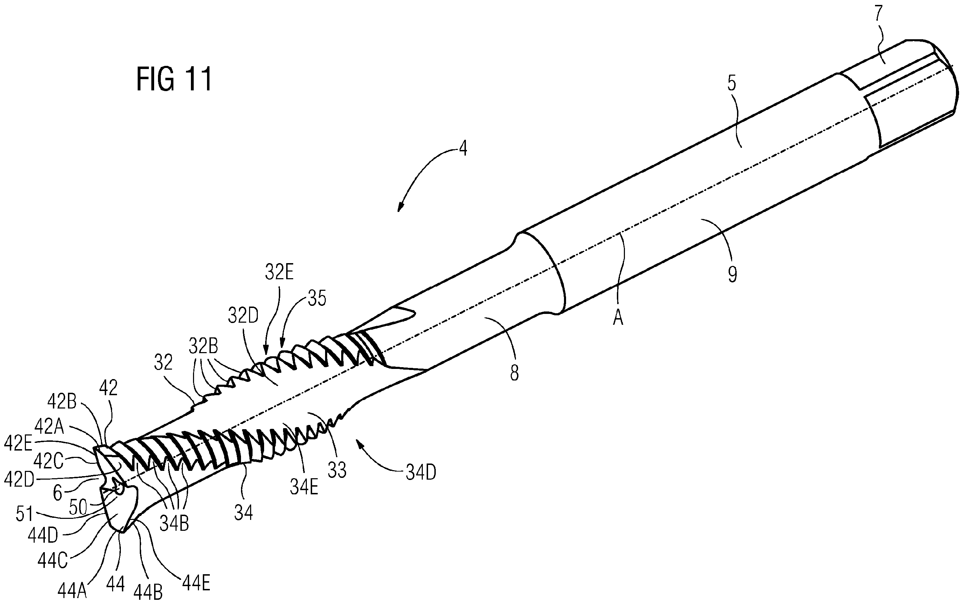

Die FIG 11 bis 15 zeigen in verschiedenen Darstellungen ein kombiniertes Werkzeug 4 gemäß der Erfindung, bei dem im vorderen Abschnitt 8 des Werkzeugs 4 zusätzlich zu zwei schneidenden Gewindeerzeugungsbereichen 32 und 34 noch an der Stirnseite 6 ein Nuterzeugungsbereich 42 vor dem Gewindeerzeugungsbereich 32 und ein Nuterzeugungsbereich 44 vor dem Gewindeerzeugungsbereich 34 mit Drall vorgelagert sind.

Jeder Nuterzeugungsbereich 42 und 44 weist eine axial nach vorne gerichtete an der Stirnseite 6 befindliche Nutschneide 42A oder 44A auf. Die Nutschneiden 42A und 44A sind die radial am Weitesten nach außen ragenden sowie von den radial außen befindlichen Bereichen axial am Weitesten vorne befindlichen Bereiche des Werkzeuges 3 in dessen vorderem Abschnitt 8.

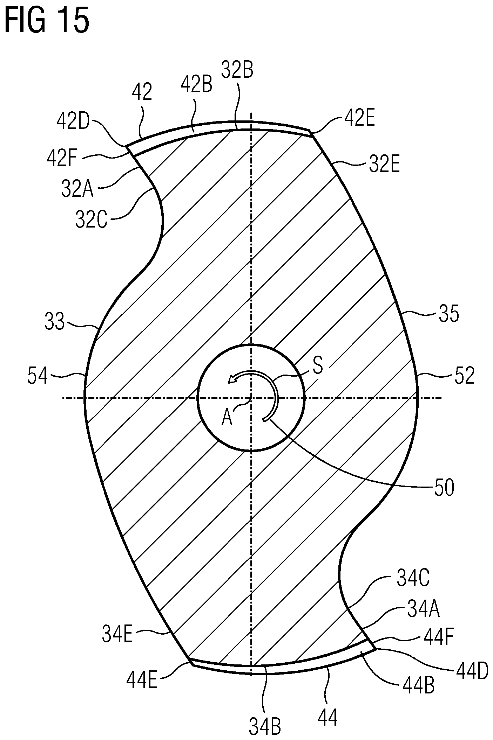

Die Nutschneiden 42A und 44A können insbesondere wenigstens annähernd kreisrund gebildet sein. Wie in FIG 15 gezeigt, ist der Radius r0 der Nutschneide 42A um einen Differenzradius $\Delta r$ größer als der Radius r1 des ersten Gewindeerzeugungsteilbereichs 321 und als der, in FIG 15, zum Radius r1 gleiche Radius r2 des zweiten Gewindeerzeugungsteilbereichs 321.

An jede Nutschneide 42A und 44A schließt sich seitlich in Umfangsrichtung eine im Drehsinn S um die Werkzeugachse A vordere Seitenschneide 42D bzw. 44D und ein im Drehsinn S um die Werkzeugachse A hinterer Seitenbereich 42E oder 44E an.

Die vordere Seitenschneide 42D und 44D schneidet beim zur Erzeugung des Gewindes erfolgenden Drehen des Werkzeugs 4 im Drehsinn S seitlich in das Werkstück ein und ist entsprechend geschliffen, so dass sich radial nach innen eine Spanfläche 42F bzw. 44F anschließt zur Spanabfuhr. Der hintere Seitenbereich 42E und 444E ist dagegen stumpf und vorzugsweise konvex ausgebildet, da er nur folgt, jedoch nicht schneiden muss.

Axial hinter der Nutschneide 42A und 44A schließt sich eine Freifläche 42B bzw. 44B an, die, wie in FIG 15 gezeigt, vom Radius r0 auf einen Radius, der kleiner ist als der Radius r1 des ersten Drückstollens 32-1, abfällt, insbesondere linear oder konisch.

Radial nach innen schließt sich an die Nutschneide 42A eine stirnseitige Spanfläche 42C und an die Nutschneide 44A entsprechend eine Spanfläche 44C an, die linear oder auch konkav gekrümmt axial nach hinten verläuft und auf der beim Räumen der Nut mit der Nutschneide 42A bzw. 44A entstehende Späne ablaufen. Die Spanfläche 42C oder 44C verläuft von einer tiefsten Stelle wieder axial nach vorne bis zu einem ebenen, senkrecht zur Werkzeugachse A gerichteten Zentralbereich 51, der eine zentrale Öffnung eines zentralen Kanals 50 des Werkzeugs 4 umgibt, über den Kühl- und/oder Schmiermittel zugeführt werden kann.

Die beiden Gewindeerzeugungsbereiche 32 und 34 beim Kombinationswerkzeug 4 gemäß FIG 11 bis 15 sind vorzugsweise schneidend ausgebildet und haben mehrere im Drehsinn S um die Werkzeugachse A vorne angeordnete Gewindeschneidzähne 32A und 34A, deren Außenschneiden der Form des zu erzeugenden Gewindeprofils angepasst sind. Eine radial nach innen verlaufende Spanfläche für die von den Gewindeschneidzähnen 32A und 34A erzeugten Späne ist mit 32C bzw. 34C bezeichnet. Außen schließt sich entgegengesetzt zum Drehsinn S an die Gewindeschneidzähne 32A und 34A eine äußere Freifläche 32B bzw. 34B an, die an einem im Drehsinn S hinteren Seitenbereich 32E oder 34E endet, der leicht konvex nach außen gewölbt ist.

Die von der Stirnseite 6 gesehen ersten drei Gewindeerzeugungsteilbereiche des Gewindeerzeugungsbereichs 32 mit jeweils einem Gewindeschneidzahn sind in FIG 15 mit 32-1 bis 32-3 bezeichnet.

Die Gewindeschneidzähne 32A und 34A sind die radial am Weitesten nach außen ragenden Bereiche der Gewindeerzeugungsbereiche 32 und 34. Die Nuterzeugungsbereiche 42 und 44 ragen, wie gut in FIG 15 zu erkennen, radial noch weiter nach außen als die Gewindeerzeugungsbereiche 32 und 34.

Die beiden Gewindeerzeugungsbereiche 32 und 34 sind durch dazwischen liegende Außenflächen 33 und 35 des Werkzeugs 4 sowie die davor liegenden Nuterzeugungsbereiche 42 und 44 durch dazwischen liegende Außenflächen 43 und 45 des Werkzeugs 4 voneinander getrennt. Die Außenflächen 33 und 35 sowie 43 und 45 haben einen geringeren Radius von der Werkzeugachse A oder einen geringeren Außendurchmesser als die Gewindeerzeugungsbereiche 32 und 34 und die Nuterzeugungsbereiche 42 und 44 und bilden Freiräume zwischen den schneidenden Gewindeerzeugungsbereichen 32 und 34 und den Nuterzeugungsbereichen 42 und 44, die auch zur Spanabfuhr dienen.

Bevorzugt sind, vor allem aus Gründen einer einfachen Herstellung, die Form und Kontur der im Drehsinn S vorderen und hinteren seitlichen Bereiche der Gewindeerzeugungsbereiche 32 und 34 und der Nuterzeugungsbereiche 42 und 44 sowie der Außenflächen 33 und 35 sowie 43 und 45 aneinander angepasst, insbesondere in der senkrechten Projektion entlang der Werkzeugachse A aufeinanderliegend oder kongruent, d.h. z.B. die Spanflächen 32C und 42F sowie die Seitenbereiche 32E und 42E und die Außenflächen 33 und 43 sowie 35 und 45 sind aneinander angepasst, insbesondere gemeinsam geschliffen.

Jede Außenfläche 33 und 43 sowie 35 und 45 des kombinierten Werkzeugs 3 bildet zunächst unmittelbar im Anschluss an die spanabhebenden Schneiden, also die Nutschneiden 42D und 44D und die Gewindeschneidzähne 32A und 34A konkav nach innen verlaufende Abschnitte, die die Spanflächen 32C und 34C bzw. 42F und 44F bilden und wölben sich dann konvex nach außen in Auswölbungen 52 und 54, um dann auf der anderen Seite in den konvexen Seitenbereichen 32E und 34E sowie 42E und 44E nach außen auszulaufen. Durch die konvexen Auswölbungen 52 und 54 wird eine gute Steifigkeit und Stabilität des Werkzeugs hinsichtlich Drehmomenten erreicht.

Die Konturen der Nutschneiden 42D und 44D bilden sich bei der axialen Vorschubbewegung des Werkzeugs 4 und des axialen Räum- oder Schneidvorgangs auf die Nutkontur der Nut 22 bzw. 24 ab. Die Gewindeschneidzähne 32A und 34A erzeugen bei der anschließenden Drehbewegung den Gewindegang 36.

Die Nutschneiden 42A und 44A liegen in der in FIG 11 bis 15 dargestellten Ausführungsform in einer gemeinsamen Ebene, die senkrecht zur Werkzeugachse A gerichtet ist, liegen also axial auf gleicher Höhe. Dadurch sind die dahinter liegenden Schneidenrücken oder Freiflächen 42B und 44B der Nuterzeugungsbereiche 42 und 44 entsprechend der Gewindesteigung unterschiedlich lang. In einer nicht dargestellten Ausführungsform können die Nutschneiden 42A und 44A aber auch um die Gewindesteigung axial zueinander versetzt angeordnet sein, um eine gleiche axiale Länge der Nuterzeugungsbereiche 42 und 44 zu ermöglichen.

Gemäß der Erfindung arbeiten die Gewinderzeugungsbereiche das Gewinde nur durch eine kleine Drehung zwischen einer Nut (z.B. 22 oder 24) und der nächsten Nut (z.B. 24 oder 22) ein, wobei einzelne Gewindegangabschnitte, die Teile der Helix des Gewindes bilden und durch die Nuten unterbrochen oder voneinander getrennt sind, erzeugt werden. Jeder Gewinderzeugungsbereich und jeder Gewindeschneidzahn oder Gewindeformzahn oder -keil darin erzeugt somit einen zugehörigen individuell erzeugten Gewindegangabschnitt, welcher bei Drehung nur bis zur nächsten Nut nur einmalig und nur von diesem Gewindeerzeugungsbereich und dessen Gewindeschneidzahn oder Gewindeformkeil durchlaufen und erzeugt wird. Bei Drehung jedes Gewindeerzeugungsbereichs bis zur übernächsten Nut wird der Gewindegangabschnitt zwischen zwei Nuten nur von zwei aufeinanderfolgenden Gewindeerzeugungsbereichen und deren Gewindeschneidzähnen oder Gewindeformkeilen und allgemein durchlaufen und gemeinsam hintereinander eingearbeitet. Umgekehrt betrachtet, bearbeitet jeder Gewindeerzeugungsbereich und jeder Gewindeschneidzahn oder Gewindeformzahn oder -keil darin die Werkstückoberfläche in zwei aufeinander folgenden individuellen Gewindegangabschnitten, einem zwischen der ersten Nut für i = 1 mit $1 \leq i \leq n$ und der nächsten Nut mit i = 2 und einem zwischen der nächsten Nut (i = 2) und der übernächsten Nut (i = 3 oder wieder i = 1, wenn n= 2). Bei allgemein m Weiterdrehungen bis zur m-ten folgenden Nut mit natürlicher Zahl m arbeiten m hintereinander liegende Gewindeschneidzähne oder Gewindeformkeile in demselben Gewindegangabschnitt. Jedoch wird in den seltensten Fällen m größer als 2 oder maximal 3 gewählt werden, vielmehr genügt immer bereits m = 1.

Das Außenprofil nur eines Gewindeschneidzahnes oder Gewindeformkeiles (oder höchstens m Gewindeschneidzähnen oder Gewindeformkeilen) bestimmt also bereits das endgültige Gewindeprofil des von diesem Zahn oder Keil erzeugten Gewindegangabschnitts.

Somit kann gemäß der Erfindung das Gewinde aus einzelnen Gewindegangabschnitten mit praktisch beliebig vorgegebenen Gewindeprofilen zusammengesetzt werden, wobei das Gewindeprofil jedes Gewindegangabschnittes allein und unabhängig von den anderen Gewindegangabschnitten durch das Außenprofil des bei der Drehung dem Gewindegangabschnitt zugeordneten Gewindeschneidzahnes oder Gewindeformkeiles abgebildet oder als dazu komplementär erzeugt wird.

Bei den bekannten Gewindebohrern oder Gewindefurchern ist diese individuelle Zuordnung von Zahn zu Gewindegangabschnitt nicht möglich. Vielmehr wird bei diesen Werkzeugen gemäß dem Stand der Technik der axial vorne der Stirnseite am nächsten liegende axial vorderste Gewindeschneidzahn bzw. Gewindeformzahn bei der Drehbewegung durch den gesamten Gewindegang über die gesamte Gewindelänge geführt und erzeugt dabei einen bereits in der Länge dem endgültigen Gewinde entsprechenden Vorgewindegang mit einem Vorgewindeprofil. Dieser Vorgewindegang und sein Vorgewindeprofil wird dann durch die nachfolgenden Gewindeschneidzähne bzw. Gewindeformzähne noch weiter, insbesondere am Gewindegrund und/oder an den Gewindeflanken des Gewindeprofils, eingearbeitet oder nachbearbeitet. Der nächstfolgende, zweitvorderste Gewindeschneidzahn bzw. Gewindeformzahn durchläuft beispielsweise den vom vordersten Gewindeschneidzahn bzw. Gewindeformzahn erzeugten Vorgewindegang ebenfalls über mindestens eine Länge, die der Gesamtlänge des Vorgewindes abzüglich des Abstandes zwischen vorderstem Gewindeschneidzahn bzw. Gewindeformzahn und zweitvordersten Gewindeschneidzahn bzw. Gewindeformzahn, entspricht. So wird also durch nacheinander dieselben Werkstückstellen bearbeitende entlang der Gewindehelix angeordnete Gewindeschneidzähne bzw. Gewindeformzähne das Gewindeprofil des Gewindeganges mit Gewindeflanken sukzessive in das Werkstück eingearbeitet. Diese Arbeitsabfolge wird besonders im Anlaufbereich dieser bekannten Gewindewerkzeuge deutlich.

Die Erfindung ermöglicht somit eine bei einem Gewindebohrer oder Gewindefurcher so bislang nicht mögliche axiale Unterteilung des Gewindes über seine Gewindelänge in verschiedene Gewindeabschnitte, in denen im Prinzip beliebige Gewindeprofile in beliebiger Abfolge oder Kombination erzeugt werden können. Dabei können sogar Gewinde erzeugt werden, bei denen erste Gewindegangabschnitte, die in der Vorwärtsrichtung des Werkzeugs oder in Richtung in das Gewinde vor zweiten Gewindegangabschnitten liegen, ein Gewindeprofil mit kleineren Maßen oder Außenabmessungen, insbesondere im Gewindegrund, aber ggf. auch an den Gewindeflanken, aufweisen als die zweiten Gewindegangabschnitte, was bei einem bekannten Gewindebohrer oder Gewindefurcher technisch unmöglich wäre.

In einer nicht gezeigten weiteren Ausführungsform eines Gewindeerzeugungswerkzeuges können, ausgehend von einem Gewindeerzeugungswerkzeug 4 gemäß FIG 9, der Gewindeerzeugungsbereich 32 hinter dem Nuterzeugungsbereich 42 und der Gewindeerzeugungsbereich 34 hinter dem Nuterzeugungsbereich 44 jeweils in zwei in der Drallrichtung zueinander versetzt angeordnete Gewindeerzeugungsteilbereiche unterteilt werden. In dem zur Stirnseite 6 hin angeordneten und unmittelbar zu dem zugehörigen Nuterzeugungsbereich 42 bzw. 44 benachbarten vorderen Gewindeerzeugungsteilbereich sind nun im Unterschied zu FIG 9 die Gewindeschneidzähne 32A bzw. 34A in ihrem Gewindeschneidprofil oder Außenprofil mit jeweils einer Abflachung im Zahnkopfbereich versehen, der sich beim komplementär erzeugten Gewindegang im Werkstück auf den Gewindegrund abbildet. In dem von der Stirnseite 6 abgewandten und hinter dem vorderen Gewindeerzeugungsteilbereich liegenden hinteren Gewindeerzeugungsteilbereich sind dagegen die Gewindeschneidzähne 32A bzw. 34A mit einem Gewindeschneidprofil oder Außenprofil versehen, das dem vollständigen Gewindeprofil des erzeugten Gewindes entspricht, und beispielsweise einen eher spitzen oder in eine Außenkante oder einen Grat übergehenden Zahnkopf aufweisen, der sich in einen entsprechend gestalteten Gewindegrund des Gewindeganges im Werkstück abbildet.

Jeder damit erzeugte Gewindegangabschnitt hat nun ein Gewindeprofil, das genau dem Außenprofil des zugehörigen Gewindeschneidzahnes 32A oder 34A entspricht, z.B. einem trapezförmigen Festsitzgewinde, bei dem sich die äußeren Abflachungen der Gewindeschneidzähne auf einen entsprechend abgeflachten oder weniger tiefen Gewindegrund der Gewindegangabschnitte abbilden und ein vollständiges Gewindeprofil eines metrischen Gewindes in anderen Gewindegangabschnitten. Alle derart erzeugten Gewindegangabschnitte mit unterschiedlichen Gewindeprofilen liegen auf einer gemeinsamen Gewindehelix mit der Gewindesteigung P.

In einem Ausführungsbeispiel ist der Durchmesser des vorderen Gewindeteilbereiches kleiner als der Durchmesser des hinteren Gewindeteilbereiches. Dadurch kann im vorderen Gewindeteilbereich eine Klemmwirkung für eine Schraube oder einen Gewindebolzen erreicht werden, während im als Vollgewinde ausgebildeten hinteren Gewindeteilbereich eine solche Klemmwirkung nicht auftritt. Abweichend vom dargestellten Ausführungsbeispiel kann ein Gewinde mit anderer praktisch beliebiger axialer Aufteilung seines Gewindeprofils erzeugt werden. Beispielsweise könnten auch einfach die Gewindeprofile im vorderen Gewindeteilbereich und im hinteren Gewindeteilbereich vertauscht werden, so dass die Klemmung im hinteren Gewindeteilbereich bewirkt wird.

Anstelle oder auch zusätzlich zu schneidenden Gewindeerzeugungsbereichen 32 und 34 mit Gewindeschneidzähnen 32A und 34A können in allen Ausführungsformen auch formende oder unter plastischer Verformung des Werkstücks in dieses eindrückende Gewindeerzeugungsbereiche 32 und 34 mit Gewindedrückstollen, beispielsweise wie in FIG 9 oder FIG 10 gezeigt, vorgesehen sein.

Außerdem können auch mehr als zwei Gewindeerzeugungsbereiche, beim Kombinationswerkzeug jeweils mit vorgelagertem Nuterzeugungsbereich, z.B. drei oder vier, vorgesehen sein, die gleichverteilt, also unter gleichen Winkelabständen oder auch in ungleichmäßiger Teilung angeordnet sein können.

In einer weiteren, nicht dargestellten Ausführungsform können auch wie bei einem bekannten Gewindefurcher oder Gewindebohrer die Gewinde-Drückstollen oder die Gewindeschneidzähne in einem Anlaufkegelbereich in ihrer radialen Außenabmessung bis auf die der endgültigen Gewindetiefe entsprechende maximale Außenabmessung anwachsen, um den Gewindegang in seiner Tiefe in mehreren Umdrehungen des Werkzeugs sukzessiv zu erzeugen. Diese Ausführung eignet sich vor allem für größere Gewindelängen und reduziert das bei der Gewindeerzeugung auf das Werkzeug einwirkende Moment.

Schließlich können anstelle oder zusätzlich zu schneidenden oder spanabhebenden Nuterzeugungsbereichen des Werkzeugs auch spanlos arbeitende Nuterzeugungsbereiche vorgesehen sein, die insbesondere durch plastisches Verformen oder Eindrücken der Nuten in das Material arbeiten.

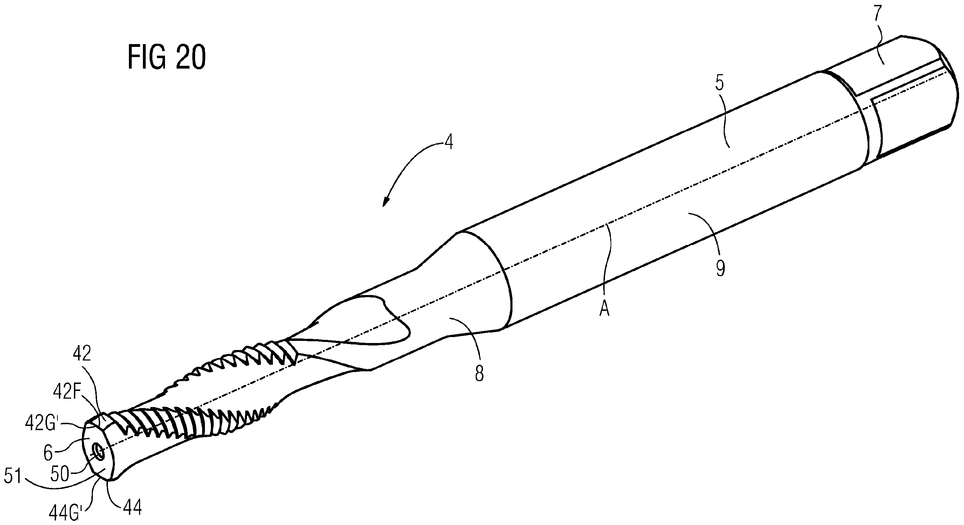

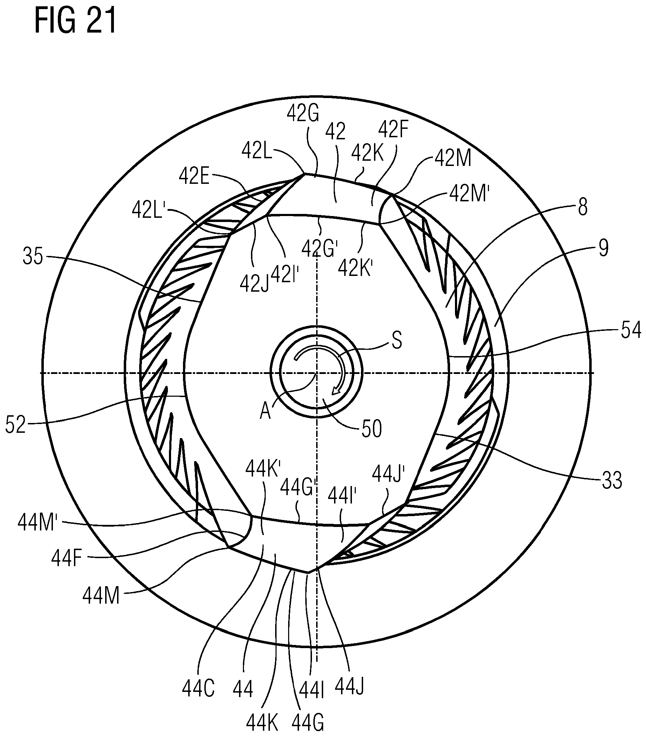

Ein Ausführungsbeispiel für ein kombiniertes Werkzeug 4 mit solchen spanlos arbeitenden Nuterzeugungsbereichen 42 und 44 ist in den FIG 20 und 21 dargestellt.

Jeder Nuterzeugungsbereich 42 und 44 weist einen zentralen, im Wesentlichen in Umfangsrichtung um die Werkzeugachse A verlaufenden Formgrat (oder: Formsteg, Drücksteg) 42G bzw. 44G auf, der axial zur Werkzeugachse A gesehen die radial höchste Erhebung des Nuterzeugungsbereichs 42 und 44 ist, also den größten radialen Abstand zur Werkzeugachse A hat oder am Weitesten nach außen ragt.

Axial vor dem Formgrat 42G oder 44G weist jeder Nuterzeugungsbereich 42 und 44 eine Vorderfläche 42F bzw. 44F auf, die von einem radial weiter innen als der Formgrat 42G bzw. 44G liegenden Vorderprofil 42G' bzw. 44G' an der Stirnseite 6 des Werkzeugs 4 zu dem Formgrat 42G bzw. 44G axial ansteigt und eine Anlauffläche bildet, mit der der Nuterzeugungsbereich 42 und 44 zuerst in die Werkstückoberfläche mit langsam zunehmender Umformkraft eindrückt .

Hinter dem Formgrat 42G oder 44G schließt sich in axialer Richtung eine Rückenfläche 42H oder 44H des Nuterzeugungsbereiches 42 und 44 an, die von dem Formgrat 42G bzw. 44G in axialer Richtung abfällt.

Der Formgrat 42G oder 44G hat nun selbst in Umfangsrichtung gesehen eine radial am Weitesten nach außen ragende Erhebung, nämlich ein Maximum 42I bzw. 44I, und fällt radial vom Maximum 42I bzw. 44I in beide Umfangsrichtungen ab, nämlich in einer Flanke 42J bzw. 44J zu einem hinteren Endpunkt 42L bzw. 44L, der radial weiter innen liegt als das Maximum 42I bzw. 44I, und in einer weiteren Flanke 42K bzw. 44K zu einem vorderen Endpunkt 42M bzw. 44M, der radial weiter innen liegt als das Maximum 42I bzw. 44I. Im Beispiel der FIG 24 liegt der Endpunkt 42M bzw. 44M radial weiter innen als der Endpunkt 42L bzw. 44L und die Flanke 42J bzw. 44J ist kürzer als die Flanke 42K bzw. 44K, das Maximum 42I bzw. 44I liegt also näher am hinteren Seitenbereich 42E bzw. 44E und hinteren Endpunkt 42L bzw. 44L des Nuterzeugungsbereiches 42 und 44. Diese asymmetrische Form der Nuterzeugungsbereiche 42 und 44 führt zu einer größeren Steifigkeit des Werkzeugs bei der Formung der Nuten und/oder ist den nachfolgenden Gewindeerzeugungsbereichen 32 und 34 angepasst. Es ist aber auch eine symmetrische Form möglich.

Das Vorderprofil 42G' oder 44G' hat eine ähnliche Form wie der Formgrat 42G bzw. 44G mit einem Maximum 42I' oder 44I' und zwei vom Maximum zu Endpunkten 42L' bzw. 44L' oder 42M' bzw. 44M' abfallenden Flanken 42J' bzw. 44J' oder 42K' bzw. 44K'. Die Vorderfläche 42F oder 44F verbindet entsprechende Maxima 42I und 42I' sowie 44I und 44I' und entsprechende Endpunkte 42L und 42I' sowie 44L und 44L' sowie natürlich die dazwischen liegenden Flanken 42J und 42J' sowie 44J und 44J' und 42K und 42K' und 44K und 44K'.

In dem Ausführungsbeispiel der FIG 22 bis 24 verläuft die Vorderfläche 42F oder 44F zwischen dem Vorderprofil und dem Formgrat in axialer Richtung im Wesentlichen linear, im Ausführungsbeispiel der FIG 25 dagegen konvex nach innen gekrümmt. Es sind diese und eine Vielzahl anderer unterschiedlicher Formen der Vorderfläche 42F oder 44F möglich je nach gewünschtem Zuwachs oder axialen Gradienten der Umformkraft.

Die in Umfangsrichtung in beide Richtungen abfallende, keilartige Form des Formgrates 42G oder 44G und der Vorderfläche 42F bzw. 44F ermöglicht ein Fließen des Werkstückmaterials auch zur Seite hin oder in Umfangsrichtung, wenn der Nuterzeugungsbereich 42 bzw. 44 axial in das Werkstück bewegt wird.

Die Gewindeerzeugungsbereiche 32 und 34 des Werkzeugs 4 können in diesen Ausführungsbeispielen gemäß FIG 20 bis 21 spanend oder auch spanlos arbeiten.

Bevorzugte Werkstoffe des Werkstücks sind Metalle, insbesondere Aluminiumlegierungen und Magnesiumlegierungen und andere Leichtmetalle, jedoch ist die Erfindung nicht auf diese Werkstoffe beschränkt. Ferner kommen als Werkstücke sowohl dickwandige oder massive Werkstücke als auch dünnwandige Bauteile oder Bleche, insbesondere aus Stahl oder anderen Werkstoffen, in Betracht.

**Bezugszeichenliste**

| 2 | Werkstück |
|---|---|
| 3 | Werkzeug |
| 4 | Gewindeerzeugungswerkzeug |
| 5 | Schaft |
| 6 | Stirnseite |
| 7 | Vielkant |
| 8 | vorderer Abschnitt |
| 9 | hinterer Abschnitt |
| 10 | Nuterzeugungswerkzeug |
| 14 | Gewindeerzeugungswerkzeug |
| 20 | Kernloch |
| 21 | Kernlochwandung |
| 22, 24 | Nut |
| 22B, 24B | Nutgrund |
| 23, 25 | Wandungsbereich |
| 32, 34 | Gewindeerzeugungsbereich |
| 32-1, 32-2 | Drückstollen |
| 32-3 | Drückstollen |
| 32A, 34A | Gewindeschneidzahn |
| 32B, 34B | Freifläche |
| 32C, 34C | Spanfläche |
| 32E, 34E | Seitenbereich |
| 32F, 34F | Abflachung |
| 32G, 34G | Zahnkopf |
| 33, 35 | Außenfläche |
| 36 | Gewindegang |
| 36F | Gewindegrund |
| 42, 44 | Nuterzeugungsbereich |
| 42A, 44A | Nutschneide |
| 42B, 44B | Freifläche |
| 42C, 44C | Spanfläche |
| 42D, 44D | vordere Seitenschneide |
| 42E, 44E | hinterer Seitenbereich |
| 42F, 44F | Vorderfläche |
| 42G, 44G | Formgrat |
| 42G', 44G' | Vorderprofil |
| 42H, 44H | Rückenfläche |
| 42I, 44I | Maximum |
| 42I', 44I' | Maximum |
| 42J, 44J | Flanke |
| 42J', 44J' | Flanke |
| 42K, 44K | Flanke |
| 42K', 44K' | Flanke |
| 42L, 44L | Endpunkt |
| 42L', 44L' | Endpunkt |
| 42M, 44M | Endpunkt |
| 42M', 44M' | Endpunkt |
| 43, 45 | Außenfläche |
| 50 | Kanal |
| 51 | Zentralbereich |
| 52, 54 | Auswölbung |
| 55 | gebohrter Bereich |
| 56 | geschnittener Bereich |

62, 64        Auswölbung
142, 144      Nuterzeugungssteg

A        Werkzeugachse
B        Stollenachse
D        Kernlochdurchmesser
E, F     Gewindedurchmesser
d        Werkzeugdurchmesser
g        Spaltbreite
S        Drehsinn
M        Mittelachse
P        Gewindesteigung
PN       Nutdrallsteigung
t        Nuttiefe
r        Radius
r0, r1, r2   Radius
h        radiale Höhe
Δr       radialer Abstand
L1, L2   axiale Länge
α        Drehwinkel
Δα       Drehwinkelkorrektur
β, β'    Winkelanteil
γ        Winkelanteil
δ, ε     Winkel
θ        Nutdrallwinkel
φ        Gewindesteigungswinkel

**Patentansprüche**

1. Verfahren zum Herstellen eines Gewindes in einem Werkstück mit den folgenden Verfahrensschritten:

   a) Erzeugen einer Anzahl n ≥ 1 von gedrallten Nuten (22, 24) in einer eine Gewindeachse (M) umlaufenden Wandung (21) des Werkstückes (2), wobei die Nuten mit einem Werkzeug (3) erzeugt werden, das wenigstens einen gedrallten Nuterzeugungsbereich (42) und wenigstens einen gedrallten Gewindeerzeugungsbereich (32, 34) aufweist, wobei entweder ausschließlich der oder die Nuterzeugungsbereich(e) die Nuten erzeugt bzw. erzeugen oder auch der oder die Gewindeerzeugungsbereich(e) zusätzlich die von dem oder den Nuterzeugungsbereich(en) erzeugte(n) Nut(en) nachbearbeitet bzw. nachbearbeiten oder mit erzeugt bzw. erzeugen,
   b) Einführen von jeweils einem der in Anpassung an den Drall der gedrallten Nuten gedrallten Gewindeerzeugungsbereiche (32, 34) des Werkzeuges (3) in jede der gedrallten Nuten (22, 24) in einer dem Drall der zugehörigen Nut angepassten gedrallten Einführbewegung,
   c) Erzeugen des Gewindes (36) in jedem an die Nut(en) (22, 24) angrenzenden Wandungsteilbereich (23, 25) der Wandung des Werkstücks durch Drehen des Werkzeuges (3) um die Gewindeachse (M) und gleichzeitigen axialen Vorschub des Werkzeuges koaxial zur Gewindeachse mit einer an die Drehgeschwindigkeit der Drehbewegung und die Gewindesteigung angepassten axialen Vorschubgeschwindigkeit, wobei während der Drehung und dem gleichzeitigen axialen Vorschub jeder Gewindeerzeugungsbereich des Werkzeugs in den zugehörigen Wandungsteilbereich eingreift und einen zugehörigen Teil eines Gewindeganges erzeugt und nach der Drehung wieder in dieselbe Nut oder eine andere Nut in der Wandung ragt,
   d) Herausbewegen jedes Gewindeerzeugungsbereiches (32, 34) des Werkzeuges aus der zugehörigen Nut (24, 22) in einer an den Drall der zugehörigen gedrallten Nut angepassten gedrallten Herausführbewegung.

2. Verfahren zum Herstellen eines Gewindes in einem Werkstück mit den folgenden Verfahrensschritten:

   a) Erzeugen einer Anzahl n ≥ 1 von gedrallten Nuten (22, 24) in einer eine Gewindeachse (M) umlaufenden Wandung (21) des Werkstückes (2) oder
   Erzeugen einer eine Anzahl n ≥ 1 von gedrallten Nuten aufweisenden und eine Gewindeachse umlaufenden Wandung des Werkstückes,
   b) Einführen von jeweils einem in Anpassung an den Drall der gedrallten Nuten gedrallten Gewindeerzeugungsbereich (32, 34) eines Werkzeuges (3) in jede der gedrallten Nuten (22, 24) in einer dem Drall der zugehörigen Nut angepassten gedrallten Einführbewegung,
   c) Erzeugen eines Gewindes (36) in jedem an die Nut(en) (22, 24) angrenzenden Wandungsteilbereich (23, 25) der Wandung des Werkstücks durch Drehen des Werkzeuges (3) um die Gewindeachse (M) und gleichzeitigen axialen Vorschub des Werkzeuges koaxial zur Gewindeachse mit einer an die Drehgeschwindigkeit der Drehbewegung und die Gewindesteigung angepassten axialen Vorschubgeschwindigkeit, wobei während der Drehung und dem gleichzeitigen axialen Vorschub jeder Gewindeerzeugungsbereich in den zugehörigen Wandungsteilbereich eingreift und einen zugehörigen Teil eines Gewindeganges erzeugt und nach der Drehung wieder in dieselbe Nut oder eine andere Nut in der Wandung ragt,
   d) wobei wenigstens eine, vorzugsweise jede, Nut (22, 24) spanlos erzeugt wird
   oder

   wobei wenigstens eine, vorzugsweise jede Nut (22, 24) spanabhebend erzeugt wird
   oder
   wobei die Wandung des Werkstücks und die Nuten in der Wandung gemeinsam in einem Bearbeitungsverfahrensschritt oder mit einem Bearbeitungswerkzeug erzeugt werden,

e) wobei wenigstens ein Gewindeerzeugungsbereich (32, 34) ein Gewindeformbereich ist, der seinen Teil des Gewindeganges formend und damit spanlos erzeugt,

f) Herausbewegen jedes Gewindeerzeugungsbereiches (32, 34) des Werkzeuges aus der zugehörigen Nut (24, 22) in einer an den Drall der zugehörigen gedrallten Nut angepassten gedrallten Herausführbewegung.

3. Verfahren nach einem der Ansprüche 1 oder 2, bei dem bei dem Erzeugen des Gewindes eine Drehung des Werkzeuges um einen vorgegebenen Drehwinkel erfolgt und

a) bei dem der Drehwinkel ($\alpha$) beim Erzeugen des Gewindes der Summe aus einem Winkelabstand zweier Nuten, vorzugsweise zweier unmittelbar benachbarter Nuten, einerseits und einem Korrekturterm, der proportional zu dem Quotienten (P / (PN - P)) aus der Gewindesteigung (P) des zu erzeugenden Gewindes und der Differenz der Drallsteigung (PN) der Nuten und der Gewindesteigung des zu erzeugenden Gewindes ist, wobei vorzugsweise die Gewindesteigung (P) und die Drallsteigung (PN) positiv bei einem Rechtsgewinde oder einem Rechtsdrall und negativ bei einem Linksgewinde oder Linksdrall gewählt sind, andererseits entspricht und/oder

b) bei dem der Drehwinkel ($\alpha$) beim Erzeugen des Gewindes so gewählt wird, dass jeder Gewindeerzeugungsbereich nach der Drehung in eine Nut ragt, die zu der Nut, in die der Gewindeerzeugungsbereich vor der Drehung ragt, unmittelbar benachbart ist, und/oder

c) bei dem die n Nuten in einem gleichen Winkelabstand von 360°/n zueinander erzeugt werden und bei dem vorzugsweise der Drehwinkel ($\alpha$) sich aus einem ganzzahligen Vielfachen der Summe von 360°/n einerseits und einem Korrekturterm, der dem Produkt aus 360°/n einerseits und dem Quotienten (P / (PN - P)) aus der Gewindesteigung (P) des zu erzeugenden Gewindes und der Differenz der Drallsteigung (PN) der Nuten und der Gewindesteigung (P) des zu erzeugenden Gewindes andererseits entspricht, ergibt, wobei vorzugsweise die Gewindesteigung (P) und die Drallsteigung (PN) positiv bei einem Rechtsgewinde oder einem Rechtsdrall und negativ bei einem Linksgewinde oder Linksdrall gewählt sind.

4. Verfahren nach einem der vorhergehenden Ansprüche mit wenigstens einem der folgenden Merkmale:

a) jede gedrallte Nut wird im Wesentlichen als helikal, vorzugsweise auf einer Zylinderfläche oder einem Konus, um die Gewindeachse verlaufende Nut erzeugt,
b) jeder Gewindeerzeugungsbereich verläuft beim Erzeugen des Gewindes im Wesentlichen helikal, vorzugsweise auf einer Zylinderfläche oder einem Konus, um die Gewindeachse,
c) jede Nut und jeder Gewindeerzeugungsbereich weisen den gleichen Drall sowohl im Umlaufsinn um die Gewindeachse oder Werkzeugachse (A) als auch in der Drallsteigung (PN) oder im Drallwinkel ($\theta$) auf,
d) die Nutdrallsteigung (PN) ist deutlich größer gewählt als die Gewindesteigung (P), im Allgemeinen wenigstens viermal so groß, insbesondere wenigstens sechsmal so groß, vorzugsweise wenigstens achtzehnmal so groß oder sogar wenigstens sechsunddreißig mal so groß,
e) der Nutdrallwinkel ($\theta$) ist deutlich größer als der Gewindesteigungswinkel ($\varphi$) gewählt, insbesondere größer als das zweifache und vorzugsweise größer als das Vierfache, wobei die Winkel jeweils gemessen zur gegenüber der Querschnittsebene senkrecht zur Gewindeachse (M) bzw. Werkzeugachse (A) sind,
f) der Nutdrallwinkel ($\theta$) liegt in einem Bereich zwischen 2° und 70°, insbesondere zwischen 5° und 45° und vorzugsweise zwischen 7° und 25°.
g) die Drallrichtungen oder Umlaufsinne von Nuten und Gewinde um die Gewindeachse sind gleich, als beide rechts oder beide links herum, oder entgegengesetzt, also eines rechts und eines links herum.

5. Verfahren nach einem der vorhergehenden Ansprüche mit wenigstens einem oder einer beliebigen Kombination der folgenden Merkmale:

a) wenigstens eine, vorzugsweise jede, Nut wird mit einem spanabhebend arbeitenden entlang der gewünschten Nut bewegten Nuterzeugungswerkzeug oder Nuterzeugungsbereich eines Werkzeugs, beispielsweise einem Räum- oder Hobelwerkzeug wie einer Räumnadel oder auch mit einem Fräser, insbesondere Nutfräser erzeugt,
b) wenigstens eine, vorzugsweise jede, Nut wird mit einem in Richtung der gewünschten Nut bewegten spanlos arbeitenden Nuterzeugungswerkzeug oder Nuterzeugungsbereich eines Werkzeugs erzeugt.

6. Verfahren nach einem der vorhergehenden Ansprüche, bei dem beim Einführen in die zugehörige Nut der Gewindeerzeugungsbereich in zur Gewindeachse radialer Richtung in die zugehörige Nut unter Einhaltung eines radialen Abstandes ($\Delta$r) zum Nutgrund (22B, 24B) und vorzugsweise auch eines Abstandes zu den Nutflanken ragt.

7. Verfahren nach einem der vorhergehenden Ansprüche mit wenigstens einem oder einer beliebigen Kombination der folgenden Merkmale:

   a) wenigstens ein Teil der Gewindeerzeugungsbereiche (32 und 34) des Gewindeerzeugungswerkzeugs (3) weisen auf einer dem zu erzeugenden Gewinde in der Gewindesteigung entsprechenden Schraubenlinie um die Werkzeugachse (A) angeordnete Gewindedrückstollen auf, die innerhalb des Gewindeerzeugungsbereiches radial am Weitesten nach außen ragen,

   b) wenigstens ein Gewindeerzeugungsbereich ist ein Gewindeschneidbereich und erzeugt seinen Teil des Gewindeganges spanabhebend,

   c) wenigstens eine Teil der Gewindeerzeugungsbereiche (32 und 34) des Gewindeerzeugungswerkzeugs (3) weisen auf einer dem zu erzeugenden Gewinde in der Gewindesteigung entsprechenden Schraubenlinie um die Werkzeugachse (A) angeordnete Gewindeschneidzähne (32A bzw. 34A) auf, die innerhalb des Gewindeerzeugungsbereiches radial am Weitesten nach außen ragen, wobei sich an die Gewindeschneidzähne (32A, 34A) in Richtung entgegengesetzt zur Schneidrichtung oder Drehrichtung vorzugsweise äußere Freiflächen (32B, 34B) anschließen.

8. Verfahren nach einem der vorhergehenden Ansprüche, bei dem die Wandung des Werkstückes, in der das Gewinde erzeugt wird, eine Kernlochwandung eines Kernloches, insbesondere eines Sackloches oder eines Durchgangsloches, in dem Werkstück ist.

9. Verfahren nach einem der vorhergehenden Ansprüche mit wenigstens einem oder einer beliebigen Kombination der folgenden Merkmale:

   a) das Außenprofil nur eines Gewindeschneidzahnes oder Gewindeformkeiles eines Gewindeerzeugungswerkzeuges bestimmt bereits das endgültige Gewindeprofil des von diesem Zahn oder Keil erzeugten Gewindegangabschnitts,

   b) das Gewinde (36) wird mit wenigstens zwei axial versetzten Gewindeteilbereichen mit unterschiedlichen Gewindeprofilen erzeugt, wobei insbesondere beliebige Gewindeprofile in beliebiger Abfolge kombinierbar sind,

   c) ein erster Gewindeteilbereich weist ein Gewindeprofil mit wenigstens teilweise kleineren Maßen oder Außenabmessungen, insbesondere am Gewindegrund und/oder an den Gewindeflanken, auf als ein zweiter Gewindeteilbereich,

   d) der erste Gewindeteilbereich ist ein vorderer Gewindeteilbereich und der zweite Gewindeteilbereich ist ein hinterer Gewindeteilbereich, wobei der vordere Gewindeteilbereich axial oder in Vorschubrichtung vor dem hinteren Gewindeteilbereich liegt,

   e) der erste, vorzugsweise vordere, Gewindeteilbereich hat in seinem Gewindeprofil eine Abflachung im Gewindegrund,

   f) der zweite, insbesondere hintere, Gewindeteilbereich hat ein Gewindeprofil, das einen radial weiter außen liegenden Gewindegrund aufweist als das Gewindeprofil des ersten, vorzugsweise vorderen, Gewindeteilbereichs,

   g) der Durchmesser eines Gewindeteilbereichs, insbesondere des ersten Gewindeteilbereichs oder des vorderen Gewindeteilbereichs, ist kleiner als der Durchmesser eines anderen Gewindeteilbereichs, insbesondere des zweiten Gewindeteilbereichs oder hinteren Gewindeteilbereichs.

10. Werkzeug zum Herstellen eines Gewindes in einem Werkstück, insbesondere zur Verwendung in einem Verfahren nach einem der Ansprüche 1 bis 9, mit den Merkmalen:

   a) das Werkzeug ist um eine Werkzeugachse (A) drehbar,

   b) das Werkzeug weist eine Anzahl n $\geq$ 1 von um die Werkzeugachse (A) gedrallten Nuterzeugungsbereichen (42, 44) zum Erzeugen jeweils einer Nut (22, 24) in dem Werkstück (2) und eine Anzahl m $\geq$ 1 von um die Werkzeugachse (A) gedrallten, vorzugsweise helikalen, Gewindeerzeugungsbereichen (32, 34) zum Erzeugen des Gewindes (36) in dem Werkstück auf,

   c) der Drall des oder der Nuterzeugungsbereiche(s) (42, 44) und der Drall des oder der Gewindeerzeugungsbereiche(s) (32, 34) sind aneinander angepasst,

   d) jeder der m Gewindeerzeugungsbereiche ist hinter einem der n Nuterzeugungsbereiche dem Drall dieses Nuterzeugungsbereichs folgend angeordnet,

   e) wenigstens ein Teil der Gewindeerzeugungsbereiche (32 und 34) des Gewindeerzeugungswerkzeugs (3) weisen auf einer dem zu erzeugenden Gewinde in der Gewindesteigung und dem Windungssinn entsprechenden Schraubenlinie um die Werkzeugachse (A) angeordnete Gewindedrückstollen und/oder Gewindeschneidzähne (32A bzw. 34A) auf, die innerhalb des Gewindeerzeugungsbereiches radial am Weitesten nach außen ragen.

11. Werkzeug nach Anspruch 10, bei dem wenigstens einer oder jeder der m Gewindeerzeugungsbereiche im Querschnitt in einer dem Drall folgenden Projektion eine kleinere Ausdehnung aufweist als der davor angeordnete Nuterzeugungsbereich.

12. Werkzeug nach Anspruch 10, bei dem wenigstens einer oder jeder der m Gewindeerzeugungsbereiche im Querschnitt in einer dem Drall folgenden Projektion zumindest teilweise eine gleiche oder größere Ausdehnung aufweist als der davor angeordnete Nuterzeugungsbereich.

13. Werkzeug nach einem der Ansprüche 10 bis 12, bei dem wenigstens ein Teil der n Nuterzeugungsbereiche als spanabhebende Nuterzeugungsbereiche mit Nuterzeugungsschneiden ausgebildet sind, wobei die Nuterzeugungsschneiden insbesondere als Räumschneiden ausgebildet sind und/oder an einer Stirnseite des Werkzeugs angeordnet sind, wobei insbesondere wenigstens ein Teil der spanabhebenden Nuterzeugungsbereiche und/oder Nuterzeugungsschneiden in der Drallrichtung und/oder in Umfangsrichtung jeweils wenigstens eine Stufe oder Kante aufweisen, die insbesondere als Spanaufteilstufe oder -kante vorgesehen ist.

14. Werkzeug nach einem der Ansprüche 10 bis 13 mit wenigstens einem oder einer beliebigen Kombination der folgenden Merkmale:

a) wenigstens ein Teil der n Nuterzeugungsbereiche sind als spanlos arbeitende und/oder durch plastisches Verformen oder Eindrücken des Werkstückmaterials arbeitende Nuterzeugungsbereiche ausgebildet,

b) jeder Nuterzeugungsbereich (42, 44) weist einen, im Wesentlichen in Umfangsrichtung um die Werkzeugachse (A) verlaufenden Formgrat (42G, 44G) auf, der axial oder in Drallrichtung gesehen die radial höchste Erhebung des Nuterzeugungsbereichs (42, 44) ist und/oder radial am Weitesten nach außen ragt,

c) axial oder in Drallrichtung vor dem Formgrat (42G, 44G) weist jeder Nuterzeugungsbereich( 42, 44) eine Vorderfläche (42F, 44F) auf,

d) die Vorderfläche (42F, 44F) von einem radial weiter innen als der Formgrat (42G, 44G) liegenden Vorderprofil (42G', 44G'), das insbesondere an der Stirnseite (6) des Werkzeugs (4) angeordnet ist, zu dem Formgrat (42G, 44G) in Drallrichtung oder axial ansteigt,

e) die Vorderfläche (42F, 44F) bildet eine Anlauffläche, mit der der Nuterzeugungsbereich (42, 44) zuerst in die Werkstückoberfläche und mit langsam zunehmender Umformkraft eindrückt,

f) in Drallrichtung oder axial hinter dem Formgrat (42G, 44G) weist jeder Nuterzeugungsbereich( 42, 44) eine Rückenfläche (42H, 44H) auf, die von dem Formgrat (42G, 44G) in Drallrichtung oder axial abfällt,

g) der Formgrat (42G, 44G) hat ein radial am Weitesten nach außen ragendes Maximum (42I, 44I) und fällt radial vom Maximum (42I, 44I) in einer Umfangsrichtung in einer Flanke (42J, 44J) zu einem ersten Endpunkt (42L, 44L), der radial weiter innen liegt als das Maximum (42I, 44I) und in der anderen Umfangsrichtung in einer weiteren Flanke (42K, 44K) zu einem zweiten Endpunkt (42M, 44M) der radial weiter innen liegt als das Maximum (42I, 44I), ab,

h) ein Endpunkt (42M, 44M) liegt radial weiter innen als der andere Endpunkt (42L, 44L) und/oder eine Flanke (42J, 44J) ist kürzer als die andere Flanke (42K, 44K),

i) das Vorderprofil (42G', 44G') hat eine ähnliche Form wie der Formgrat (42G, 44G) mit einem Maximum (42I', 44I') und zwei vom Maximum zu Endpunkten (42L', 44L', 42M', 44M' ) abfallenden Flanken (42J', 44J', 42K', 44K'),

j) die Vorderfläche (42F, 44F) verbindet entsprechende Maxima (42I und 42I', 44I und 44I') von Formgrat (42G, 44G) und Vorderprofil (42G', 44G') und/oder entsprechende Endpunkte (42L und 42L', 44L und 44L') und/oder entsprechende Flanken (42J und 42J', 44J und 44J', 42K und 42K', 44K und 44K'),

k) die Vorderfläche (42F, 44F) verläuft zwischen dem Vorderprofil und dem Formgrat in Drallrichtung oder axial im Wesentlichen linear oder konvex nach innen gekrümmt oder einer beliebigen stetigen radialen Funktion folgend.

15. Werkzeug nach einem der Ansprüche 10 bis 14 mit wenigstens einem oder einer beliebigen Kombination der folgenden Merkmale:

a) die n Nuterzeugungsbereiche sind um die Werkzeugachse in einem gleichen Winkelabstand von 360°/n zueinander angeordnet,

b) der Winkelanteil β eines oder jedes Nuterzeugungsbereichs und der dahinter liegenden Gewindeerzeugungsbereiche um die Werkzeugachse (A) beträgt zwischen 7,2° und 45°, insbesondere zwischen 13° und 40° und vorzugsweise zwischen 27° und 36°.

c) die Gewindeerzeugungsbereiche (32 und 34) ragen radial weiter nach außen als die übrigen Außenflächen (33, 35) des Gewindeerzeugungswerkzeugs (3),

d) die Nuterzeugungsbereiche und/oder die Gewindeerzeugungsbereiche sind lösbar oder auswechselbar an einem Werkzeugträger befestigt.

16. Werkzeug nach einem der Ansprüche 10 bis 15 mit wenigstens einem oder einer beliebigen Kombination der folgenden Merkmale:

a) wenigstens ein Gewindeerzeugungsbereich ist ein Gewindeformbereich und erzeugt seinen Teil des Gewindeganges formend und damit spanlos,

b) die Gewindedrückstollen ragen radial weniger weit nach außen als der oder die Nuterzeugungsbereich(e).

17. Werkzeug nach einem der Ansprüche 10 bis 16 mit wenigstens einem oder einer beliebigen Kombination der folgenden Merkmale:

a) wenigstens ein Gewindeerzeugungsbereich ist ein Gewindeschneidbereich und erzeugt seinen Teil des Gewindeganges spanabhebend,

b) die Gewindeschneidzähne (32A bzw. 34A) ragen radial weniger weit nach außen als der oder die Nuterzeugungsbereich(e), wobei sich an die Gewindeschneidzähne (32A, 34A) in Richtung entgegengesetzt zur Schneidrichtung oder Drehrichtung vorzugsweise äußere Freiflächen (32B, 34B) anschließen.

18. Werkzeug nach einem der Anspruch 10 bis 17,

bei dem die Gewindeschneidzähne (32A bzw. 34A) im Windungssinn des zu erzeugenden Gewindes und der Schraubenlinie um die Werkzeugachse (A), auf der die Gewindeschneidzähne (32A bzw. 34A) angeordnet sind, schneidend angeordnet und ausgebildet sind

oder

bei dem die Gewindeschneidzähne (32A bzw. 34A) entgegengesetzt zum Windungssinn des zu erzeugenden Gewindes und der Schraubenlinie um die Werkzeugachse (A), auf der die Gewindeschneidzähne (32A bzw. 34A) angeordnet sind, schneidend angeordnet und ausgebildet sind.

19. Werkzeug nach einem der Ansprüche 10 bis 18 mit wenigstens einem oder einer beliebigen Kombination der folgenden Merkmale:

a) wenigstes ein, vorzugsweise jeder, Nuterzeugungsbereich (42, 44) weist eine zur Stirnseite gerichtete oder an dieser befindliche Nutschneide (42A, 44A) auf,

b) die Nutschneiden (42A, 44A) sind die radial am Weitesten nach außen ragenden Bereiche des Werkzeuges (3), zumindest in dessen vorderem Abschnitt (8),

c) die Nutschneiden (42A, 44A) sind wenigstens annähernd kreisrund gebildet,

d) der Radius (r0) der Nutschneiden (42A) ist um einen Differenzradius (Δr) größer als der Radius (r1) des ersten Gewindeerzeugungsteilbereichs (321),

e) an die oder jede Nutschneide (42A, 44A) schließt sich seitlich in Umfangsrichtung eine im Drehsinn (S) um die Werkzeugachse (A) vordere Seitenschneide (42D bzw. 44D) und vorzugsweise ein im Drehsinn (S) um die Werkzeugachse (A) hinterer Seitenbereich (42E oder 44E) an,

f) die vordere Seitenschneide (42D und 44D) schneidet beim zur Erzeugung des Gewindes erfolgenden Drehen des Werkzeugs (4) im Drehsinn (S) seitlich in das Werkstück ein, wobei sich vorzugsweise radial nach innen eine seitliche Spanfläche (42F bzw. 44F) anschließt,

g) der hintere Seitenbereich (42E und 44E) ist dagegen stumpf, also nicht schneidend und vorzugsweise konvex ausgebildet,

h) in Drallrichtung hinter der Nutschneide (42A und 44A) schließt sich eine Freifläche (42B bzw. 44B) an, die vorzugsweise vom Radius (r0) auf einen Radius, der kleiner ist als der Radius (r1) des ersten Drückstollens (32-1) oder des ersten Gewindeerzeugungsteilbereichs, abfällt, insbesondere linear oder konisch,

i) radial nach innen schließt sich an die Nutschneide (42A, 44A) eine stirnseitige Spanfläche (42C, 44C) an, die linear oder auch konkav gekrümmt axial oder in Drallrichtung nach hinten verläuft und auf der beim Erzeugen oder Räumen der Nut mit der Nutschneide (42A bzw. 44A) entstehende Späne ablaufen,

j) die stirnseitige Spanfläche (42C, 44C) verläuft von einer tiefsten Stelle wieder axial oder in Drallrichtung nach vorne bis zu einem ebenen, senkrecht zur Werkzeugachse A gerichteten Zentralbereich (51), der eine zentrale Öffnung eines zentralen Kanals (50) des Werkzeugs 4 umgibt, über den Kühl- und/oder Schmiermittel zugeführt werden kann.

20. Werkzeug nach einem der Ansprüche 10 bis 19, mit wenigstens einem oder einer beliebigen Kombination der folgenden Merkmale:

a) das Gewindewerkzeug (3) umfasst einen Schaft (5), der einen, beispielsweise zylindrisch ausgebildeten, hinteren Abschnitt (9) und einen vorderen Abschnitt (8), der im Durchmesser im Anschluss an den hinteren Abschnitt (9) verjüngt ist, aufweist und durch den zentral die Werkzeugachse (A) verläuft,

b) am Ende des hinteren Abschnitts (9) ist ein Einspannbereich zum Einspannen des Schaftes (5) ausgebildet,

c) der vordere Abschnitt (8) weist zur vom hinteren Abschnitt (9) abgewandten oder vorne angeordneten Stirnseite (6) hin die m Gewindeerzeugungsbereiche (32, 34) auf,

d) die m Gewindeerzeugungsbereiche (32, 34) sind in Form von jeweils gedrallt um die Werkzeugachse (A) verlaufenden gedrallten Reihen von Gewindeerzeugungsstegen ausgebildet, die für den Fall m = 2 vorzugsweise an entgegen gesetzten Seiten der Werkzeugachse (A) diametral zueinander angeordnet sind,

e) die Gewindeerzeugungsstege verlaufen entlang der Gewindesteigung des gewünschten Gewindes und weisen jeweils einen radial zur Werkzeugachse (A) am Weitesten nach außen ragenden Drückstollen auf zum plastischen Eindrücken des Gewindeganges in das Werkstück,

f) die Außenradien unterschiedlicher Gewindeerzeugungsstege oder Drückstollen der beiden Gewindeerzeugungsbereiche (32, 34) sind gleich zueinander über die gesamte Länge,

g) die Gewindeerzeugungsbereiche (32, 34) sind durch dazwischen liegende Außenflächen (33, 35) getrennt, die einen geringeren Außenradius haben als die Gewindeerzeugungsbereiche (32, 34), also gegenüber diesen radial zurückversetzt sind, und/oder Freiräume zwischen den Gewindeerzeugungsbereichen bilden,

h) überdecken die Gewindeerzeugungsbereiche (32, 34) jeweils einen ersten Winkelbereich und die Außenflächen (33, 35) jeweils einen zweiten Winkelbereich, wobei bevorzugt der erste Winkelbereich in einem Intervall von dem einfachen bis zum 2,5-fachen des zweiten Winkelbereichs liegt und/oder wobei die Drückstollen bevorzugt mittig in den jeweiligen Winkelbereichen liegen,

i) die Außenflächen (33, 35) weisen eine konvexe nach außen gerichtete Auswölbung (52, 54) auf.

21. Werkzeug nach einem der Ansprüche 10 bis 20 mit wenigstens einem oder einer beliebigen Kombination der folgenden Merkmale:

a) das Außenprofil nur eines Gewindeschneidzahnes oder Gewindeformkeiles bestimmt bereits das endgültige Gewindeprofil des von diesem Zahn oder Keil erzeugten Gewindegangabschnitts,

b) die Gewindeerzeugungsbereiche sind in versetzte Gewindeerzeugungsteilbereiche mit unterschiedlichen Gewindeaußenprofilen unterteilt, wobei insbesondere beliebige Gewindeaußenprofile in beliebiger Abfolge kombinierbar sind,

c) ein erster Gewindeerzeugungsteilbereich, vorzugsweise ein vorderer Gewindeerzeugungsteilbereich, der in Richtung zur Stirnseite hin vor einem hinteren Gewindeerzeugungsteilbereich liegt, weist ein Gewindeaußenprofil mit wenigstens teilweise kleineren Maßen oder Außenabmessungen, insbesondere am Profilkopf, aber ggf. auch an den Profilflanken, auf als ein zweiter Gewindeerzeugungsteilbereich, vorzugsweise der hintere Gewindeerzeugungsteilbereich,

d) jeder erste Gewindeerzeugungsteilbereich, insbesondere vordere Gewindeerzeugungsteilbereich, hat in seinem Gewindeaußenprofil eine Abflachung im Profilkopf,

e) jeder zweite, insbesondere hintere, Gewindeerzeugungsteilbereich hat ein Außenprofil, das einen radial weiter nach außen ragenden Profilkopf aufweist als der erste Gewindeerzeugungsteilbereich, insbesondere vordere Gewindeerzeugungsteilbereich,

f) der Durchmesser eines Gewindeerzeugungsteilbereichs, insbesondere des ersten Gewindeerzeugungsteilbereiches oder des vorderen Gewindeerzeugungsteilbereiches, ist kleiner als der Durchmesser eines anderen Gewindeerzeugungsteilbereichs, insbesondere des zweiten Gewindeerzeugungsteilbereiches oder des hinteren Gewindeerzeugungsteilbereiches.

## Claims

1. Method for producing a thread in a workpiece with the following method steps:

a) producing a number n ≥ 1 of twisted grooves (22, 24) in a wall (21) of the workpiece (2) surrounding a thread axis (M), the grooves being produced with a tool (3) which has at least one twisted groove-producing region (42) and at least one twisted thread-producing region (32, 34), either the groove-producing region(s) exclusively producing the grooves, or the thread-producing region(s) additionally reworking or co-producing the groove(s) produced by the groove-producing region(s), or the thread-producing region(s) additionally reworking or co-producing the groove(s) produced by the groove-producing region(s). or the thread-forming area(s) additionally rework(s) or co-produce(s) the groove(s) produced by the groove forming area(s),

b) inserting one of the thread-forming areas (32, 34) of the tool (3), twisted to match the twist of the twisted grooves, into each of the twisted grooves (22, 24) in a twisted insertion movement matching the twist of the associated groove,

c) producing the thread (36) in each wall portion region (23, 25) of the wall of the workpiece adjacent to the groove(s) (22, 24) by rotating the tool (3) about the thread axis (M) and simultaneously axially advancing the tool coaxially with the thread axis at an axial feed rate adapted to the rotational speed of the rotary motion and the thread pitch, wherein during the rotation and simultaneous axial advance, each thread-forming portion of the tool engages the associated wall portion and forms an associated portion of a thread and after the rotation again projects into the same groove or another groove in the wall,

d) moving each thread-forming area (32, 34) of the tool out of the associated groove (24, 22) in a twisted lead-out motion adapted to the twist of the associated twisted groove.

2. Method for producing a thread in a workpiece with the following method steps:

a) producing a number n ≥ 1 of twisted grooves (22, 24) in a wall (21) of the workpiece (2) surrounding a thread axis (M)

or

creating a wall of the workpiece having a number n ≥ 1 of twisted grooves and surrounding a thread axis,

b) inserting a thread-forming area (32, 34) of a tool (3), twisted to match the twist of the twisted grooves, into each of the twisted grooves (22, 24) in a twisted insertion movement matched to the twist of the associated groove,

c) producing a thread (36) in each wall portion region (23, 25) of the wall of the workpiece adjacent to the groove(s) (22, 24) by rotating the tool (3) about the thread axis (M) and simultaneously axially advancing the tool coaxially with the thread axis at an axial feed rate adapted to the rotational speed of the rotary motion and the thread pitch, wherein during the rotation and the simultaneous axial advance, each thread generating region engages the associated wall portion and generates an associated part of a thread and after the rotation projects again into the same groove or another groove in the wall,

d) wherein at least one, preferably each, groove (22, 24) is produced without cutting

or

wherein at least one, preferably each groove (22, 24) is produced by chip removal

or

wherein the wall of the workpiece and the grooves in the wall are created together in one machining process step or with one machining tool,

e) wherein at least one thread-forming region (32, 34) is a thread-forming region which forms its part of the thread and thus produces it without cutting,

f) moving each thread-forming area (32, 34) of the tool out of the associated groove (24, 22) in a twisted lead-out motion adapted to the twist of the associated twisted groove.

3. Method according to any one of claims 1 or 2, in which, when the thread is produced, the tool is rotated through a predetermined angle of rotation, and

a) in which the angle of rotation ($\alpha$) when producing the thread corresponds to the sum of an angular distance between two grooves, preferably between two directly adjacent grooves, on the one hand, and a correction term which is proportional to the quotient (P / (PN - P)) of the thread pitch (P) of the thread to be produced and the difference between the twist pitch (PN) of the grooves and the thread pitch of the thread to be produced, the thread pitch (P) and the twist pitch (PN) preferably being selected to be positive in the case of a right-hand thread or a right-hand twist and negative in the case of a left-hand thread or a left-hand twist, on the other hand corresponding to

and/or

b) in which the angle of rotation ($\alpha$) when producing the thread is selected so that each thread producing area after rotation projects into a groove which is immediately adjacent to the groove into which the thread producing area projects before rotation,

and/or

c) in which the n grooves are produced at an equal angular spacing of 360°/n from one another and in which preferably the angle of rotation ($\alpha$) is formed from an integral multiple of the sum of 360°/n on the one hand and a correction term, which corresponds to the product of 360°/n on the one hand and the quotient (P / (PN - P)) of the thread pitch (P) of the thread to be produced and the difference of the twist pitch (PN) of the grooves and the thread pitch (P) of the thread to be produced on the other hand, wherein preferably the thread pitch (P) and the twist pitch (PN) are selected to be positive in the case of a right-hand thread or a right-hand twist and negative in the case of a left-hand thread or left-hand twist.

4. Method according to any one of the preceding claims, having at least one of the following features:

a) each twisted groove is produced substantially as a helical groove, preferably on a cylindrical surface or cone, extending around the thread axis,

b) each thread-forming area extends substantially helically, preferably on a cylindrical surface or cone, about the thread axis when forming the thread,

c) each groove and each thread-forming area have the same twist both in the direction of rotation around the thread axis or tool axis (A) and in the twist pitch (PN) or in the twist angle ($\theta$),

d) the groove pitch (PN) is chosen to be significantly larger than the thread pitch (P), generally at least four times as large, in particular at least six times as large, preferably at least eighteen times as large or even at least thirty-six times as large,

e) the groove twist angle ($\theta$) is selected to be significantly greater than the thread pitch angle ($\varphi$), in particular greater than twice and preferably greater than four times, the angles being in each case measured with respect to the cross-sectional plane perpendicular to the thread axis (M) or tool axis (A),

f) the groove twist angle ($\theta$) is in a range between 2° and 70°, in particular between 5° and 45° and preferably between 7° and 25°.

g) the directions of twist or orbits of the grooves and threads about the thread axis are the same, as both to the right or both to the left, or opposite, i.e. one to the right and one to the left.

5. Method according to any one of the preceding claims, comprising at least one or any combination of the following features:

a) at least one, preferably each, groove is created with a groove-creating tool or groove-creating area of a tool, for example a broaching or planing tool such as a broach, or also with a milling cutter, in particular a groove milling cutter, moving along the desired groove,

b) at least one, preferably each, groove is created with a chipless grooving tool or grooving area of a tool moved in the direction of the desired groove.

6. Method according to any one of the preceding claims, in which, on insertion into the associated groove, the thread-forming region projects into the associated groove in the radial direction relative to the thread axis while maintaining a radial distance ($\Delta r$) from the groove base (22B, 24B) and preferably also a distance from the groove flanks.

7. Method according to any one of the preceding claims, comprising at least one or any combination of the following features:

a) at least a part of the thread-forming areas (32 and 34) of the thread-forming tool (3) have thread pressure studs arranged around the tool axis (A) on a helix corresponding to the thread to be produced in the thread pitch, which studs project radially furthest outwards within the thread-forming area,

b) at least one thread-forming area is a thread cutting area and produces its part of the thread by chip removal,

c) at least some of the thread-forming regions (32 and 34) of the thread-forming tool (3) have thread-cutting teeth (32A and 34A respectively) arranged around the tool axis (A) on a helix corresponding to the thread to be formed in the thread pitch. 34A) which project radially furthest outwards within the thread-forming region, the thread-cutting teeth (32A, 34A) preferably being adjoined by outer flanks (32B, 34B) in the direction opposite to the cutting direction or direction of rotation.

8. Method according to any one of the preceding claims, wherein the wall of the workpiece in which the thread is produced is a core hole wall of a core hole, in particular a blind hole or a through hole, in the workpiece.

9. Method according to any one of the preceding claims, comprising at least one or any combination of the following features:

a) the external profile of only one thread cutting tooth or thread-forming wedge of a thread-forming tool already determines the final thread profile of the thread section produced by this tooth or wedge,

b) the thread (36) is produced with at least two axially offset threaded part regions with different thread profiles, wherein in particular any thread profiles can be combined in any sequence,

c) a first threaded part region has a thread profile with at least partially smaller dimensions or external dimensions, in particular at the thread base and/or at the thread flanks, than a second threaded part region,

d) the first threaded portion is a front threaded portion and the second threaded portion is a rear threaded portion, the front threaded portion being axially or in the feed direction in front of the rear threaded portion,

e) the first, preferably front, thread section has a flattening in the thread base in its thread profile,

f) the second, in particular rear, threaded section has a thread profile which has a thread base which is located radially further out than the thread profile of the first, preferably front, threaded section,

g) the diameter of one threaded portion, in particular the first threaded portion or the front threaded portion, is smaller than the diameter of another threaded portion, in particular the second threaded portion or rear threaded portion.

10. Tool for producing a thread in a workpiece, in particular for use in a method according to any one of claims 1 to 9, having the features:

a) the tool is rotatable around a tool axis (A),

b) the tool has a number n ≥ 1 of groove-generating regions (42, 44) twisted about the tool axis (A) for generating a respective groove (22, 24) in the workpiece (2) and a number m ≥ 1 of preferably helical thread-generating regions (32, 34) twisted about the tool axis (A) for generating the thread (36) in the workpiece,

c) the twist of the nut forming area(s) (42, 44) and the twist of the thread-forming area(s) (32, 34) are matched,

d) each of the m thread generating regions is located behind one of the n groove generating regions following the twist of that groove generating region,

e) at least a part of the thread-forming areas (32 and 34) of the thread-forming tool (3) have thread pressure studs and/or thread cutting teeth (32A and 34A respectively) arranged on a helix around the tool axis (A) corresponding to the thread to be formed in the thread pitch and the sense of winding, which studs and/or teeth project radially furthest outwards within the thread-forming area.

11. Tool according to claim 10, wherein at least one or each of the m thread generating regions has a smaller extension in cross-section in a projection following the twist than the groove generating region arranged in front of it.

12. Tool according to claim 10, in which at least one or each of the m thread-forming regions has, in cross-section in a projection following the twist, at least partially an equal or greater extent than the groove-forming region arranged in front of it.

13. Tool according to one of claims 10 to 12, in which at least some of the n groove-generating regions are designed as chip-removing groove-generating regions with groove-generating cutting edges, the groove-generating cutting edges being designed in particular as broaching cutting edges and/or being arranged on an end face of the tool, in particular at least some of the chip-removing groove-generating regions and/or groove-generating cutting edges having in each case at least one step or edge in the twist direction and/or in the circumferential direction, which step or edge is provided in particular as a chip-splitting step or edge.

14. Tool according to any one of claims 10 to 13, having at least one or any combination of the following features:

a) at least a part of the n groove generating areas are designed as groove generating areas working without cutting and/or by plastic deformation or pressing in of the workpiece material,

b) each groove forming area (42, 44) has a forming ridge (42G, 44G) running essentially in the circumferential direction around the tool axis (A), which ridge (42G, 44G) is the radially highest elevation of the groove forming area (42, 44), seen axially or in the twist direction, and/or projects radially furthest outwards,

c) axially or in the twist direction in front of the forming burr (42G, 44G), each groove forming area( 42, 44) has a front surface (42F, 44F),

d) the front surface (42F, 44F) rises from a front profile (42G', 44G') located radially further inwards than the mould ridge (42G, 44G), which is arranged in particular on the end face (6) of the tool (4), to the mould ridge (42G, 44G) in the twist direction or axially,

e) the front surface (42F, 44F) forms a thrust surface with which the groove generating area (42, 44) first presses into the workpiece surface and with slowly increasing forming force,

f) in the twist direction or axially behind the mould ridge (42G, 44G), each groove generating area (42, 44) has a back surface (42H, 44H) which slopes away from the mould ridge (42G, 44G) in the twist direction or axially,

g) the mould ridge (42G, 44G) has a radially outermost maximum (42I, 44I) and falls radially from the maximum (42I, 44I) in a circumferential direction in a flank (42J, 44J) to a first end point (42L, 44L), which lies radially further inwards than the maximum (42I, 44I) and in the other circumferential direction in a further flank (42K, 44K) to a second end point (42M, 44M) which lies radially further inwards than the maximum (42I, 44I),

h) one end point (42M, 44M) is radially further inwards than the other end point (42L, 44L) and/or one flank (42J, 44J) is shorter than the other flank (42K, 44K),

i) the front profile (42G', 44G') has a similar shape to the mould ridge (42G, 44G) with a maximum (42I', 44I') and two flanks (42J', 44J', 42K', 44K') sloping from the maximum to end points (42L', 44L', 42M', 44M'),

j) the front surface (42F, 44F) connects corresponding maxima (42I and 42I', 44I and 44I') of the moulding ridge (42G, 44G) and front profile (42G', 44G') and/or corresponding end points (42L and 42L', 44L and 44L') and/or corresponding flanks (42J and 42J', 44J and 44J', 42K and 42K', 44K and 44K'),

k) the front surface (42F, 44F) extends between the front profile and the mould ridge in the direction of twist or axially substantially linear or convex inwardly curved or following any continuous radial function.

15. Tool according to any one of claims 10 to 14, having at least one or any combination of the following features:

a) the n groove generating areas are arranged around the tool axis at an equal angular distance of 360°/n from each other,

b) the angular proportion β of one or each groove forming area and the thread-forming areas behind it about the tool axis (A) is between 7.2° and 45°, in particular between 13° and 40° and preferably between 27° and 36°.

c) the thread-forming areas (32 and 34) project radially further outwards than the other outer surfaces (33, 35) of the thread-forming tool (3),

d) the groove forming areas and/or the thread-forming areas are detachably or interchangeably attached to a tool carrier.

16. Tool according to any one of claims 10 to 15, having at least one or any combination of the following features:

a) at least one thread-forming area is a thread-forming area and produces its part of the thread forming and thus chipless,

b) the thread-pressing studs project radially outwards less than the groove-forming area(s).

17. Tool according to any one of claims 10 to 16, having at least one or any combination of the following features:

a) at least one thread-forming area is a thread cutting area and produces its part of the thread by chip removal,

b) the thread cutting teeth (32A or 34A) project radially less far outwards than the groove generating area(s), wherein the thread cutting teeth (32A, 34A) are preferably adjoined by outer free surfaces (32B, 34B) in the direction opposite to the cutting direction or direction of rotation.

18. Tool according to any one of claims 10 to 17,

in which the thread cutting teeth (32A or 34A) are arranged and formed to cut in the winding direction of the thread to be produced and the helix about the tool axis (A) on which the thread cutting teeth (32A or 34A) are arranged

or

in which the thread cutting teeth (32A or 34A) are arranged and formed to cut in the opposite direction to the direction of winding of the thread to be produced and the helix about the tool axis (A) on which the thread cutting teeth (32A or 34A) are arranged.

19. Tool according to any one of claims 10 to 18, having at least one or any combination of the following features:

a) at least one, preferably each, groove generating area (42, 44) has a groove edge (42A, 44A) directed towards or located at the front face,

b) the grooving edges (42A, 44A) are the radially outermost portions of the tool (3), at least in its front portion (8),

c) the groove edges (42A, 44A) are formed at least approximately circular,

d) the radius (r0) of the grooved cutting edges (42A) is larger than the radius (r1) of the first thread-forming portion (321) by a differential radius (Δ r),

e) a front side cutting edge (42D or 44D) in the direction of rotation (S) about the tool axis (A) and preferably a rear side region (42E or 44E) in the direction of rotation (S) about the tool axis (A) adjoin the or each grooving cutting edge (42A, 44A) laterally in the circumferential direction,

f) the front side cutting edge (42D and 44D) cuts laterally into the workpiece when the tool (4) is rotated in the direction of rotation (S) to produce the thread, with a lateral rake face (42F or 44F) preferably adjoining it radially inwards,

g) the rear side area (42E and 44E), on the other hand, is blunt, i.e. non-intersecting and preferably convex,

h) in the direction of twist, behind the grooving edge (42A and 44A), a free surface (42B and 44B, respectively) adjoins, which preferably decreases from the radius (r0) to a radius smaller than the radius (r1) of the first spinning stud (32-1) or the first thread-forming part, in particular linear or conical,

i) radially inwardly adjoining the grooving edge (42A, 44A) is a frontal rake face (42C, 44C), which extends linearly or also concavely curved axially or in the direction of twist to the rear and on which chips produced during the creation or broaching of the groove with the grooving edge (42A or 44A) run off,

j) the frontal rake face (42C, 44C) extends from a lowest point again axially or forwardly in the direction of twist to a flat central region (51) perpendicular to the tool axis A, which surrounds a central opening of a central channel (50) of the tool 4, via which coolant and/or lubricant can be supplied.

20. Tool according to any one of claims 10 to 19, having at least one or any combination of the following features:

a) the threading tool (3) comprises a shank (5) which has a rear section (9), for example of cylindrical design, and a front section (8) which is tapered in diameter following the rear section (9) and through which the tool axis (A) runs centrally,

b) a clamping area for clamping the shaft (5) is formed at the end of the rear section (9),

c) the front section (8) has the m thread generating areas (32, 34) towards the front side (6) facing away from the rear section (9) or towards the front,

d) the m thread-forming areas (32, 34) are formed in the form of twisted rows of thread-forming webs extending around the tool axis (A) in each case, which are preferably arranged diametrically to each other on opposite sides of the tool axis (A) for the case m = 2,

e) the thread-forming webs run along the thread pitch of the desired thread and each have a spinning stud projecting radially outwards furthest from the tool axis (A) for plastically pressing the thread into the workpiece,

f) the outer radii of different thread-forming lands or spinning lands of the two thread-forming areas (32, 34) are equal to each other over the entire length,

g) the thread-generating areas (32, 34) are separated by intermediate outer surfaces (33, 35) which have a smaller outer radius than the thread-generating areas (32, 34), i.e. are set back radially with respect thereto, and/or form free spaces between the thread-generating areas,

h) the thread generating areas (32, 34) each cover a first angular range and the outer surfaces (33, 35) each cover a second angular range, wherein preferably the first angular range lies in an interval from one to 2.5 times the second angular range and/or wherein the spinning studs preferably lie centrally in the respective angular ranges,

i) the outer surfaces (33, 35) have a convex outward bulge (52, 54).

21. Tool according to any one of claims 10 to 20, having at least one or any combination of the following features:

tures:

a) the external profile of only one thread cutting tooth or thread-forming wedge already determines the final thread profile of the thread section produced by this tooth or wedge,

b) the thread-forming areas are divided into staggered thread-forming subareas with different thread outer profiles, whereby in particular any thread outer profiles can be combined in any sequence,

c) a first thread-forming section, preferably a front thread-forming section, which lies in front of a rear thread-forming section in the direction towards the end face, has a thread outer profile with at least partially smaller dimensions or outer dimensions, in particular at the profile head, but possibly also at the profile flanks, than a second thread-forming section, preferably the rear thread-forming section,

d) each first thread-forming section, in particular front thread-forming section, has a flattening in the profile head in its thread outer profile,

e) each second, in particular rear, thread-forming sub-region has an outer profile which has a profile head projecting radially further outwards than the first thread-forming sub-region, in particular front thread-forming sub-region,

f) the diameter of one thread-forming section, in particular the first thread-forming section or the front thread-forming section, is smaller than the diameter of another thread-forming section, in particular the second thread-forming section or the rear thread-forming section.

## Revendications

1. Procédé de fabrication d'un filetage dans une pièce à usiner, comprenant les étapes de procédé suivantes:

a) réalisation d'un nombre n≥ 1 de rainures hélicoïdales (22, 24) dans une paroi (21) de la pièce (2) entourant un axe de filetage (M), les rainures étant réalisées avec un outil (3) qui présente au moins une zone de réalisation de rainures hélicoïdales (42) et au moins une zone de réalisation de filets hélicoïdaux (32, 34), soit la ou les zones de réalisation de rainures réalisant ou réalisant exclusivement les rainures, soit la ou les zones de réalisation de filets réalisant ou réalisant exclusivement les rainures. soit la ou les zone(s) de taraudage usinent en outre la ou les rainure(s) produite(s) par la ou les zone(s) de taraudage ou la ou les produisent également,

b) l'introduction de l'une respective des parties de production de filet (32, 34) de l'outil (3), qui sont tordues en s'adaptant à la torsion des rainures tordues, dans chacune des rainures tordues (22, 24) selon un mouvement d'introduction tordu adapté à la torsion de la rainure associée,

c) produire le filetage (36) dans chaque zone partielle de paroi (23, 25) de la paroi de la pièce à usiner, adjacente à la ou aux rainures (22, 24), par rotation de l'outil (3) autour de l'axe de filetage (M) et avance axiale simultanée de l'outil coaxiale à l'axe de filetage, à une vitesse d'avance axiale adaptée à la vitesse de rotation du mouvement de rotation et au pas de filetage, dans lequel, pendant la rotation et l'avance axiale simultanée, chaque zone de production de filet de l'outil s'engage dans la zone partielle de paroi associée et produit une partie associée d'un filet et, après la rotation, fait à nouveau saillie dans la même gorge ou dans une autre gorge de la paroi,

d) faire sortir chaque zone de production de filet (32, 34) de l'outil de la rainure associée (24, 22) dans un mouvement de sortie hélicoïdal adapté à l'hélice de la rainure hélicoïdale associée.

**2.** Procédé de fabrication d'un filetage dans une pièce à usiner, comprenant les étapes de procédé suivantes:

a) création d'un nombre n≥ 1 de rainures hélicoïdales (22, 24) dans une paroi (21) de la pièce (2) entourant un axe de filetage (M)
ou
Création d'une paroi de la pièce présentant un nombre n≥ 1 de rainures hélicoïdales et entourant un axe de filetage,

b) l'introduction d'une zone de production de filet (32, 34) respective d'un outil (3), qui a été tordue en s'adaptant à la torsion des rainures tordues, dans chacune des rainures tordues (22, 24) dans un mouvement d'introduction tordu adapté à la torsion de la rainure associée,

c) produire un filetage (36) dans chaque zone partielle de paroi (23, 25) de la paroi de la pièce à usiner, adjacente à la ou aux rainures (22, 24), en faisant tourner l'outil (3) autour de l'axe de filetage (M) et en faisant avancer simultanément l'outil axialement, coaxialement à l'axe de filetage, à une vitesse d'avance axiale adaptée à la vitesse de rotation du mouvement de rotation et au pas de filetage, dans lequel, pendant la rotation et l'avance axiale simultanée, chaque zone de production de filet s'engage dans la zone partielle de paroi associée et produit une partie associée d'un filet et, après la rotation, fait à nouveau saillie dans la même rainure ou dans une autre rainure de la paroi,

d) au moins une, de préférence chaque, rainure (22, 24) étant réalisée sans enlèvement de copeaux
ou

au moins une, de préférence chaque, rainure (22, 24) étant réalisée par enlèvement de copeaux
ou
dans lequel la paroi de la pièce et les rainures dans la paroi sont créées ensemble dans une étape de procédé d'usinage ou avec un outil d'usinage,

e) dans lequel au moins une zone de production de filet (32, 34) est une zone de formage de filet qui produit sa partie du filet par formage et donc sans enlèvement de copeaux,

f) le déplacement de chaque zone de production de filet (32, 34) de l'outil hors de la rainure associée (24, 22) dans un mouvement d'extraction hélicoïdal adapté à l'hélice de la rainure hélicoïdale associée.

**3.** Procédé selon l'une des revendications 1 ou 2, dans lequel, lors de la réalisation du filetage, on effectue une rotation de l'outil d'un angle de rotation prédéterminé, et

a) dans lequel l'angle de rotation ($\alpha$) lors de la production du filet correspond à la somme d'une distance angulaire de deux rainures, de préférence de deux rainures directement voisines, d'une part, et d'un terme de correction qui est proportionnel au quotient (P / (PN - P)) du pas de vis (P) du filet à produire et de la différence du pas d'hélice (PN) des rainures et du pas de vis du filet à produire, le pas de filetage (P) et le pas d'hélice (PN) étant de préférence choisis positifs pour un filetage à droite ou une hélice à droite et négatifs pour un filetage à gauche ou une hélice à gauche, d'autre part, correspond à
et/ou

b) dans lequel l'angle de rotation ($\alpha$) lors de la production du filet est choisi de telle sorte que chaque zone de production de filet, après la rotation, fait saillie dans une rainure qui est immédiatement adjacente à la rainure dans laquelle la zone de production de filet fait saillie avant la rotation, et/ou

c) dans lequel les n rainures sont produites à une distance angulaire égale de 360°/n les unes par rapport aux autres et dans lequel, de préférence, l'angle de rotation ($\alpha$) se compose d'un multiple entier de la somme de 360°/n d'une part et d'un terme de correction, qui correspond au produit de 360°/n d'une part et au quotient (P / (PN - P)) du pas de vis (P) du filet à produire et de la différence entre le pas d'hélice (PN) des rainures et le pas de vis (P) du filet à produire d'autre part, le pas de vis (P) et le pas d'hélice (PN) étant de préférence choisis positifs pour un filet à droite ou une hélice à droite et négatifs pour un filet à gauche ou une hélice à gauche.

4. Procédé selon l'une quelconque des revendications précédentes, présentant au moins l'une des caractéristiques suivantes:

a) chaque rainure hélicoïdale est produite essentiellement sous la forme d'une rainure hélicoïdale, de préférence sur une surface cylindrique ou un cône, autour de l'axe du filet,

b) chaque zone de production de filet s'étend sensiblement en hélice, de préférence sur une surface cylindrique ou un cône, autour de l'axe du filet lors de la production du filet,

c) chaque rainure et chaque zone de production de filet présentent la même hélice aussi bien dans le sens de rotation autour de l'axe du filet ou de l'axe de l'outil (A) que dans le pas d'hélice (PN) ou l'angle d'hélice (θ),

d) le pas de la gorge (PN) est choisi nettement plus grand que le pas du filet (P), en général au moins quatre fois plus grand, en particulier au moins six fois plus grand, de préférence au moins dix-huit fois plus grand, voire au moins trente-six fois plus grand,

e) l'angle d'hélice de la rainure (θ) est choisi nettement plus grand que l'angle d'inclinaison du filet (φ), en particulier plus grand que le double et de préférence plus grand que le quadruple, les angles étant respectivement mesurés par rapport au plan de la section transversale perpendiculaire à l'axe du filet (M) ou à l'axe de l'outil (A),

f) l'angle de torsion de la rainure (θ) se situe dans une plage comprise entre 2° et 70°, en particulier entre 5° et 45° et de préférence entre 7° et 25°.

g) les directions d'hélice ou les sens de rotation des rainures et des filets autour de l'axe du filet sont identiques, comme les deux à droite ou les deux à gauche, ou opposés, c'est-à-dire l'un à droite et l'autre à gauche.

5. Procédé selon l'une quelconque des revendications précédentes, comprenant au moins l'une des caractéristiques suivantes ou une combinaison quelconque de celles-ci:

a) au moins une rainure, de préférence chaque rainure, est réalisée à l'aide d'un outil de génération de rainures ou d'une zone de génération de rainures d'un outil travaillant par enlèvement de copeaux et se déplaçant le long de la rainure souhaitée, par exemple un outil de brochage ou de rabotage tel qu'une broche ou également à l'aide d'une fraise, en particulier une fraise à rainurer,

b) au moins une rainure, de préférence chaque rainure, est produite avec un outil de production de rainures ou une zone de production de rainures d'un outil travaillant sans enlèvement de copeaux et se déplaçant en direction de la rainure souhaitée.

6. Procédé selon l'une des revendications précédentes, dans lequel, lors de l'introduction dans la rainure associée, la zone de génération de filet fait saillie dans la rainure associée dans une direction radiale par rapport à l'axe du filet en respectant une distance radiale (Δ r) par rapport au fond de la rainure (22B, 24B) et de préférence également une distance par rapport aux flancs de la rainure.

7. Procédé selon l'une quelconque des revendications précédentes, comprenant au moins l'une des caractéristiques suivantes ou une combinaison quelconque de celles-ci:

a) au moins une partie des zones de production de filet (32 et 34) de l'outil de production de filet (3) présentent des tasseaux de pression de filet disposés autour de l'axe d'outil (A) sur une ligne hélicoïdale correspondant au filet à produire dans le pas de filet, qui font saillie radialement le plus loin vers l'extérieur à l'intérieur de la zone de production de filet,

b) au moins une zone de production de filet est une zone de taraudage et produit sa partie du filet par enlèvement de copeaux,

c) au moins une partie des zones de production de filet (32 et 34) de l'outil de production de filet (3) présente des dents de coupe de filet (32A ou 34) disposées autour de l'axe de l'outil (A) sur une ligne hélicoïdale correspondant au filet à produire dans le pas de filet. 34A) qui font saillie radialement le plus loin vers l'extérieur à l'intérieur de la zone de production du filet, des surfaces de dépouille (32B, 34B) extérieures se raccordant de préférence aux dents de coupe du filet (32A, 34A) dans la direction opposée au sens de coupe ou au sens de rotation.

8. Procédé selon l'une quelconque des revendications précédentes, dans lequel la paroi de la pièce dans laquelle le filetage est réalisé est une paroi de trou de carotte d'un trou de carotte, en particulier d'un trou borgne ou d'un trou traversant, dans la pièce.

9. Procédé selon l'une quelconque des revendications précédentes, comprenant au moins une des caractéristiques suivantes ou une combinaison quelconque de celles-ci:

a) le profil extérieur d'une seule dent de taraudage ou d'une seule cale à tarauder d'un outil de production de filets détermine déjà le profil final du filet produit par cette dent ou cale,

b) le filetage (36) est produit avec au moins deux zones partielles de filetage décalées axialement avec des profils de filetage différents, des profils de filetage quelconques pouvant notamment être combinés dans une séquence quelconque,

c) une première zone partielle de filetage présente un profil de filetage avec des dimensions ou des dimensions extérieures au moins partiellement plus petites, en particulier au fond du filetage et/ou sur les flancs du filetage, qu'une deuxième zone partielle de filetage,

d) la première partie filetée est une partie filetée avant et la deuxième partie filetée est une partie filetée arrière, la partie filetée avant étant située axialement ou dans la direction d'avance en avant de la partie filetée arrière,

e) la première partie de filet, de préférence avant, présente dans son profil de filet un méplat au fond du filet,

f) la deuxième partie filetée, en particulier la partie arrière, a un profil de filetage qui présente un fond de filet situé radialement plus à l'extérieur que le profil de filetage de la première partie filetée, de préférence la partie avant,

g) le diamètre d'une zone partielle de filetage, en particulier la première zone partielle de filetage ou la zone partielle de filetage avant, est inférieur au diamètre d'une autre zone partielle de filetage, en particulier la deuxième zone partielle de filetage ou la zone partielle de filetage arrière.

10. Outil pour la réalisation d'un filetage dans une pièce, en particulier pour l'utilisation dans un procédé selon l'une des revendications 1 à 9, avec les caractéristiques suivantes:

a) l'outil peut tourner autour d'un axe d'outil (A),

b) l'outil présente un nombre n≥ 1 de zones de génération de rainures (42, 44) torsadées autour de l'axe d'outil (A) pour générer respectivement une rainure (22, 24) dans la pièce à usiner (2) et un nombre m≥ 1 de zones de génération de filets (32, 34) torsadées autour de l'axe d'outil (A), de préférence hélicoïdales, pour générer le filet (36) dans la pièce à usiner,

c) la torsion de la ou des zones de production de noix (42, 44) et la torsion de la ou des zones de production de filet (32, 34) sont adaptées l'une à l'autre,

d) chacune des m zones de génération de filet est disposée derrière l'une des n zones de génération de filet en suivant la torsion de cette zone de génération de filet,

e) au moins une partie des zones de production de filet (32 et 34) de l'outil de production de filet (3) présentent des tasseaux de pression de filet et/ou des dents de filetage (32A ou 34A) disposés autour de l'axe d'outil (A) sur une ligne hélicoïdale correspondant au filet à produire dans le pas de filet et le sens d'enroulement, qui font saillie radialement le plus loin vers l'extérieur à l'intérieur de la zone de production de filet.

11. Outil selon la revendication 10, dans lequel au moins l'une ou chacune des m zones de génération de filet présente en section transversale, dans une projection suivant la torsion, une extension plus petite que la zone de génération de filet disposée devant.

12. outil selon la revendication 10, dans lequel au moins une ou chacune des m zones de génération de filet présente en section transversale, dans une projection suivant la torsion, une extension au moins partiellement égale ou supérieure à celle de la zone de génération de filet disposée devant.

13. Outil selon l'une des revendications 10 à 12, dans lequel au moins une partie des n zones de génération de rainures sont réalisées sous forme de zones de génération de rainures par enlèvement de copeaux avec des arêtes de génération de rainures, les arêtes de génération de rainures étant réalisées en particulier sous forme d'arêtes de brochage et/ou étant disposées sur une face frontale de l'outil, au moins une partie des zones de génération de rainures par enlèvement de copeaux et/ou des arêtes de génération de rainures présentant en particulier dans la direction de torsion et/ou dans la direction périphérique respectivement au moins un gradin ou une arête, qui est prévu en particulier comme gradin ou arête de division de copeaux.

14. Outil selon l'une quelconque des revendications 10 à 13, présentant au moins l'une des caractéristiques suivantes ou une combinaison quelconque de celles-ci:

a) au moins une partie des n zones de production de rainures sont réalisées sous forme de zones de production de rainures travaillant sans enlèvement de copeaux et/ou travaillant par déformation plastique ou enfoncement du matériau de la pièce à usiner,

b) chaque zone de production de rainure (42, 44) présente une bavure de moulage (42G, 44G) s'étendant sensiblement dans la direction circonférentielle autour de l'axe d'outil (A), qui, vue axialement ou dans la direction de torsion, est la saillie radialement la plus élevée de la zone de production de rainure (42, 44) et/ou fait saillie radialement le plus loin vers l'extérieur,

c) axialement ou dans le sens de la torsion, en amont de la bavure de moulage (42G, 44G), chaque zone de génération de rainures ( 42, 44) présente une surface avant (42F, 44F),

d) la surface avant (42F, 44F) s'élève dans le sens de la torsion ou axialement depuis un profil avant (42G', 44G') situé radialement plus à l'intérieur que la bavure de moulage (42G, 44G), qui est notamment disposé sur la face frontale (6) de l'outil (4), vers la bavure de moulage (42G, 44G),

e) la surface avant (42F, 44F) forme une surface d'attaque avec laquelle la zone de génération de noix (42, 44) s'enfonce d'abord dans la surface de la pièce à usiner et avec une force de formage augmentant lentement,

f) dans le sens de la torsion ou axialement derrière la bavure de moulage (42G, 44G), chaque zone de génération de rainures ( 42, 44) présente une surface arrière (42H, 44H) qui est inclinée depuis la bavure de moulage (42G, 44G) dans le sens de la torsion ou axialement,

g) la bavure de moulage (42G, 44G) a un maximum (42I, 44I) s'étendant radialement le plus loin vers l'extérieur et tombe radialement du maximum (42I, 44I) dans une direction circonférentielle dans un flanc (42J, 44J) vers un premier point d'extrémité (42L, 44L), qui se trouve radialement plus à l'intérieur que le maximum (42I, 44I) et dans l'autre direction circonférentielle dans un autre flanc (42K, 44K) vers un deuxième point final (42M, 44M) qui se trouve radialement plus à l'intérieur que le maximum (42I, 44I),

h) un point d'extrémité (42M, 44M) est situé radialement plus à l'intérieur que l'autre point d'extrémité (42L, 44L) et/ou un flanc (42J, 44J) est plus court que l'autre flanc (42K, 44K),

i) le profil avant (42G', 44G') a une forme similaire à celle de la bavure de moulage (42G, 44G) avec un maximum (42I', 44I') et deux flancs (42J', 44J', 42K', 44K') descendant du maximum vers des points d'extrémité (42L', 44L', 42M', 44M'),

j) la face avant (42F, 44F) relie des maxima respectifs (42I et 42I', 44I et 44I') de la bavure de moulage (42G, 44G) et du profil avant (42G', 44G') et/ou des points d'extrémité respectifs (42L et 42L', 44L et 44L') et/ou des flancs respectifs (42J et 42J', 44J et 44J', 42K et 42K', 44K et 44K'),

k) la surface avant (42F, 44F) s'étend entre le profil avant et la bavure de moulage dans la direction de torsion ou axialement de manière sensiblement linéaire ou convexe courbée vers l'intérieur ou suivant une fonction radiale continue quelconque.

**15.** Outil selon l'une quelconque des revendications 10 à 14, présentant au moins l'une des caractéristiques suivantes ou une combinaison quelconque de celles-ci:

   a) les n zones de génération d'utérus sont disposées autour de l'axe de l'outil à une distance angulaire égale de 360°/n les unes des autres,
   b) la fraction angulaire β d'une ou de chaque zone de génération de rainure et des zones de génération de filet situées derrière elle autour de l'axe d'outil (A) est comprise entre 7,2° et 45°, en particulier entre 13° et 40° et de préférence entre 27° et 36°.
   c) les zones de production de filet (32 et 34) font saillie radialement plus vers l'extérieur que les autres surfaces extérieures (33, 35) de l'outil de production de filet (3),
   d) les zones de génération de rainures et/ou les zones de génération de filets sont fixées de manière amovible ou interchangeable à un porte-outil.

**16.** Outil selon l'une quelconque des revendications 10 à 15, présentant au moins l'une des caractéristiques suivantes ou une combinaison quelconque de celles-ci:

   a) au moins une zone de production de filet est une zone de taraudage et produit sa partie du filet par formage et donc sans enlèvement de copeaux,
   b) les tasseaux de pression filetés font saillie radialement moins loin vers l'extérieur que la ou les zones de production de noix.

**17.** Outil selon l'une quelconque des revendications 10 à 16, présentant au moins l'une des caractéristiques suivantes ou une combinaison quelconque de celles-ci:

   a) au moins une zone de production de filet est une zone de taraudage et produit sa partie du filet par enlèvement de copeaux,
   b) les dents de filetage (32A ou 34A) font saillie radialement moins loin vers l'extérieur que la ou les zones de génération de rainures, des surfaces libres (32B, 34B) de préférence extérieures se raccordant aux dents de filetage (32A, 34A) dans la direction opposée au sens de coupe ou au sens de rotation.

**18.** Outil selon l'une quelconque des revendications 10 à 17,

   dans lequel les dents de filetage (32A ou 34A) sont disposées et formées de manière à couper dans le sens d'enroulement du filet à produire et de l'hélice autour de l'axe d'outil (A) sur lequel les dents de filetage (32A ou 34A) sont disposées

ou

dans lequel les dents de filetage (32A ou 34A) sont disposées et formées de manière à couper dans le sens opposé au sens d'enroulement du filet à produire et à l'hélice autour de l'axe d'outil (A) sur lequel les dents de filetage (32A ou 34A) sont disposées.

19. Outil selon l'une quelconque des revendications 10 à 18, présentant au moins une des caractéristiques suivantes ou une combinaison quelconque de celles-ci:

a) au moins une, de préférence chaque, zone de génération de rainure (42, 44) présente une arête de rainure (42A, 44A) orientée vers la face frontale ou située sur celle-ci,

b) les arêtes de coupe rainurées (42A, 44A) sont les zones de l'outil (3) qui font saillie radialement le plus loin vers l'extérieur, au moins dans sa partie avant (8),

c) les arêtes de coupe de rainure (42A, 44A) sont formées au moins approximativement de manière circulaire,

d) le rayon (r0) des arêtes de coupe de rainure (42A) est supérieur au rayon (r1) de la première partie de production de filet (321) d'un rayon différentiel ($\Delta$ r),

e) la ou chaque arête de coupe rainurée (42A, 44A) est suivie latéralement dans la direction circonférentielle par une arête de coupe latérale (42D ou 44D) située à l'avant dans le sens de rotation (S) autour de l'axe (A) de l'outil et de préférence par une zone latérale (42E ou 44E) située à l'arrière dans le sens de rotation (S) autour de l'axe (A) de l'outil,

f) l'arête de coupe latérale avant (42D et 44D) coupe latéralement dans la pièce à usiner lors de la rotation de l'outil (4) dans le sens de rotation (S) pour réaliser le filetage, une face de coupe latérale (42F ou 44F) se raccordant de préférence radialement vers l'intérieur,

g) la zone latérale arrière (42E et 44E) est par contre émoussée, donc non coupante et de préférence convexe,

h) dans la direction de torsion, en aval de l'arête de coupe de la rainure (42A et 44A), se raccorde une surface de dépouille (42B ou 44B) qui diminue de préférence du rayon (r0) à un rayon qui est plus petit que le rayon (r1) de la première tige de repoussage (32-1) ou de la première partie de production de filet, en particulier de manière linéaire ou conique,

i) radialement vers l'intérieur, une face de coupe frontale (42C, 44C) se raccorde à l'arête de coupe de la rainure (42A, 44A), qui s'étend axialement ou dans le sens de la rotation vers l'arrière, de manière linéaire ou également avec une courbure concave, et sur laquelle s'écoulent les copeaux produits lors de la création ou du brochage de la rainure avec l'arête de coupe de la rainure (42A ou 44A),

j) la face de coupe frontale (42C, 44C) s'étend à nouveau axialement ou dans le sens de la torsion vers l'avant à partir d'un point le plus bas jusqu'à une zone centrale (51) plane, orientée perpendiculairement à l'axe d'outil A, qui entoure une ouverture centrale d'un canal central (50) de l'outil 4, par laquelle un agent de refroidissement et/ou de lubrification peut être amené.

20. Outil selon l'une quelconque des revendications 10 à 19, comprenant au moins une caractéristique ou une combinaison quelconque des caractéristiques suivantes:

a) l'outil de filetage (3) comprend une tige (5) qui présente une section arrière (9), par exemple de forme cylindrique, et une section avant (8) dont le diamètre se rétrécit à la suite de la section arrière (9), et à travers laquelle s'étend de manière centrale l'axe (A) de l'outil,

b) à l'extrémité de la partie arrière (9) est formée une zone de serrage pour le serrage de la tige (5),

c) la section avant (8) présente, vers la face frontale (6) opposée à la section arrière (9) ou disposée à l'avant, les m zones de production de filetage (32, 34),

d) les m zones de production de filet (32, 34) sont réalisées sous la forme de rangées hélicoïdales respectives de barrettes de production de filet s'étendant autour de l'axe d'outil (A), qui sont disposées de préférence sur des côtés opposés de l'axe d'outil (A) de manière diamétralement opposée l'une à l'autre pour le cas où m = 2,

e) les barrettes de production de filet s'étendent le long du pas de vis du filet souhaité et présentent chacune une barrette de pression faisant saillie le plus loin vers l'extérieur radialement par rapport à l'axe d'outil (A) pour l'enfoncement plastique du filet dans la pièce à usiner,

f) les rayons extérieurs de différentes barrettes de production de filet ou de barrettes de pression des deux zones de production de filet (32, 34) sont égaux entre eux sur toute la longueur,

g) les zones de production de filetage (32, 34) sont séparées par des surfaces extérieures (33, 35) situées entre elles, qui ont un rayon extérieur inférieur à celui des zones de production de filetage (32, 34), donc qui sont radialement en retrait par rapport à celles-ci, et/ou qui forment des espaces libres entre les zones de production de filetage,

h) les zones de génération de filet (32, 34) recouvrent chacune une première zone angulaire et les surfaces extérieures (33, 35) recouvrent chacune une deuxième zone angulaire, la première zone angulaire se situant de préférence dans un intervalle allant du simple au 2,5 fois la deuxième zone angulaire et/ou les tasseaux de pression se situant de préférence au centre des zones angulaires respectives,

i) les surfaces extérieures (33, 35) présentent un renflement convexe (52, 54) orienté vers l'extérieur.

21. Outil selon l'une quelconque des revendications 10 à 20, présentant au moins l'une des caractéristiques suivantes ou une combinaison quelconque de celles-ci:

a) le profil extérieur d'une seule dent de taraudage ou d'une seule cale à tarauder détermine déjà le profil final du filet produit par cette dent ou cale,

b) les zones de production de filetage sont divisées en zones partielles de production de filetage décalées avec différents profils extérieurs de filetage, des profils extérieurs de filetage quelconques pouvant notamment être combinés dans une séquence quelconque,

c) une première zone partielle de production de filetage, de préférence une zone partielle de production de filetage avant, qui se situe en direction du côté frontal avant une zone partielle de production de filetage arrière, présente un profil extérieur de filetage avec des dimensions ou des dimensions extérieures au moins partiellement plus petites, en particulier au niveau de la tête du profil, mais le cas échéant également au niveau des flancs du profil, qu'une deuxième zone partielle de production de filetage, de préférence la zone partielle de production de filetage arrière,

d) chaque première partie de production de filet, en particulier la partie de production de filet avant, a un méplat dans son profil extérieur de filet dans la tête de profil,

e) chaque deuxième partie de production de filetage, en particulier arrière, a un profil extérieur qui présente une tête de profil faisant saillie radialement plus vers l'extérieur que la première partie de production de filetage, en particulier avant,

f) le diamètre d'une zone partielle de production de filetage, en particulier la première zone partielle de production de filetage ou la zone partielle de production de filetage avant, est inférieur au diamètre d'une autre zone partielle de production de filetage, en particulier la deuxième zone partielle de production de filetage ou la zone partielle de production de filetage arrière.

FIG 1

FIG 2

FIG 3

FIG 4

FIG 5

**FIG 6**

**FIG 7**

**FIG 8**

FIG 9

FIG 10

FIG 11

FIG 12

FIG 16

FIG 13

FIG 14

# FIG 15

FIG 17

FIG 18

FIG 19

FIG 20

FIG 21

FIG 22

EP 2 861 373 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2703419 A
- DE 102005022503 A1
- DE 1176450
- US 3359581 A
- EP 2218536 A1
- EP 2522451 A1

**In der Beschreibung aufgeführte Nicht-Patentliteratur**

- Handbuch der Gewindetechnik und Frästechnik. Publicis Corporate Publishing, 2004
- EMUGE-Handbuch. 181-298
- EMUGE-Handbuch. 325-372
- EMUGE-Handbuch. vol. 11, 373-404
- EMUGE-Handbuch. 299-324
- EMUGE-Handbuch. 373-404
- EMUGE-Handbuch. 354
- EMUGE-Handbuch. 355